# EUROPEAN PATENT SPECIFICATION

(11) **EP 4 016 222 B1**
(45) Date of publication and mention of the grant of the patent: **04.09.2024**
(21) Application number: 21213060.3
(22) Date of filing: 08.12.2021
(51) Int. Cl.: G05B 23/02

(54) **MONITORING THE REMAINING USEFUL LIFETIME OF AN ASSET**
ÜBERWACHUNG DER VERBLEIBENDEN NUTZUNGSDAUER EINER ANLAGE
SURVEILLANCE DE LA DURÉE DE VIE UTILE RESTANTE D'UNE INSTALLATION

(30) Priority: 18.12.2020 IN 202011055170
(43) Date of publication of application: 22.06.2022
(73) Proprietor: Honeywell International Inc., Charlotte, NC 28202 (US)
(72) Inventor: KRISHNASWAMY, Meenakshi Sundaram, Charlotte, 28202 (US); SRIVASTAVA, Viraj, Charlotte, 28202 (US); DANI, Minal, Charlotte, 28202 (US); SHARMA, Puneet, Charlotte, 28202 (US); JAIN, Akanksha, Charlotte, 28202 (US)
(74) Representative: Houghton, Mark Phillip

(56) References cited:
- MORADI RAMIN ET AL: "Modernizing risk assessment: A systematic integration of PRA and PHM techniques", RELIABILITY ENGINEERING AND SYSTEM SAFETY, ELSEVIER APPLIED SCIENCE, GB, vol. 204, 15 August 2020 (2020-08-15), XP086328999, ISSN: 0951-8320, [retrieved on 20200815], DOI: 10.1016/J.RESS.2020.107194
- LONG XIONG ET AL: "Anomaly detection of spacecraft based on least squares support vector machine", PROGNOSTICS AND SYSTEM HEALTH MANAGEMENT CONFERENCE (PHM-SHENZHEN), 2011, IEEE, 24 May 2011 (2011-05-24), pages 1 - 6, XP031998406, ISBN: 978-1-4244-7951-1, DOI: 10.1109/PHM.2011.5939470

## Description

### TECHNOLOGICAL FIELD

Embodiments of the present disclosure generally relate to monitoring the remaining useful lifetime of one or more asset(s) of a system, and specifically to generating and providing a remaining useful lifetime for one or more asset(s) based on system data corresponding to any number of root cause variables associated with the one or more target asset(s).

### BACKGROUND

Assets of an operational system, for example sub-systems or individual assets, are often maintained on a regular schedule in attempts to keep the usable lifetime of the asset as long as possible without incurring downtime due to deterioration in operations of the asset. Applicant has discovered problems with current implementations of monitoring the usable lifetime of asset(s). Through applied effort, ingenuity, and innovation, Applicant has solved many of these identified problems by developing embodied in the present disclosure, which are described in detail below.
MORADI RAMIN ET AL: "Modernizing risk assessment: A systematic integration of PRA and PHM techniques" describes a method to systematically draw together the advances in Prognostics and Health Management (PHM) and Probabilistic Risk Assessment (PRA).
LONG XIONG ET AL: "Anomaly detection of spacecraft based on least squares support vector machine" describes a method to detect anomaly of spacecraft in-orbit based on Least Squares Support Vector Machine (LS-SVM).

### BRIEF SUMMARY

In general, embodiments of the present disclosure provided herein provide improvements in monitoring remaining useful lifetime of asset(s). Other implementations for monitoring remaining useful lifetime of asset(s) will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a method according to claim 1 is provided. The method may be computer-executed via one or more computing devices embodied in hardware, software, firmware, and/or a combination thereof, as described herein.

Additionally or alternatively, in some example embodiments of the method, the asset health index represents a combination of each of the at least one root cause variable.

Additionally or alternatively, in some example embodiments of the method, the first remaining lifetime value is generated utilizing a model. Additionally or alternatively still, in some such example embodiments of the method, the second remaining lifetime value is generated utilizing the model. Additionally or alternatively, in some such example embodiments of the method, the model determines that a first root cause variable of the at least one root cause variable and a second root cause variable of the at least one root cause variable have a direct relationship affecting the second remaining lifetime value.

Additionally or alternatively, in some example embodiments of the method, the example method further includes rendering at least one deviation between an expected trend for the at least one root cause variable and an actual trend for the at least one root cause variable.

Additionally or alternatively, in some example embodiments of the method, at least a portion of the received system comprises data from at least one sensor associated with the target asset.

Additionally or alternatively, in some example embodiments of the method, the example method further includes determining the target asset is utilizing a selected mode of a plurality of configurable modes, the second remaining lifetime variable determined based on the selected mode.

Additionally or alternatively, in some example embodiments of the method, receiving the system data includes receiving at least a portion of the system data in real-time at a set interval.

Additionally or alternatively, in some example embodiments of the method, the example method further includes initiating a maintenance notification based on the second remaining lifetime value.

Additionally or alternatively, in some example embodiments of the method, providing the second remaining lifetime value comprises rendering of the second remaining lifetime value, the method further includes receiving user input requesting display of the first remaining lifetime value for the at least one root cause variable; and rendering of the first remaining lifetime value.

In accordance with another aspect of the disclosure, an example system is provided. In at least one example embodiment, an example system includes at least one processor and at least one memory. The at least one memory has computer program code stored thereon that, in execution with the at least one processor, configures the system to perform any one of the example methods described herein. In yet another example embodiment, an example system includes means for performing each step of any one of the example methods described herein.

In accordance with yet another aspect of the disclosure, an example computer program product is provided. The example computer program product includes at least one non- transitory computer-readable storage medium having computer program code stored thereon that, in execution with at least one processor, configures the at least one processor to perform any one of the example methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a system for monitoring one or more asset(s) that may be specially configured within which embodiments of the present disclosure may operate;
FIG. 2 illustrates a block diagram of an example lifetime monitoring apparatus that may be specially configured in accordance with an example embodiment of the present disclosure;
FIG. 3A illustrates a visualization of an example computing environment for generating remaining lifetime value(s) using a model, in accordance with at least some example embodiments of the present disclosure;
FIG. 3B illustrates a visualization of an example computing environment for generating a root cause limit threshold for a root cause variable, in accordance with at least some example embodiments of the present disclosure;
FIG. 3C illustrates a visualization of an example computing environment for generating a remaining lifetime value for a root cause variable, in accordance with at least some example embodiments of the present disclosure;
FIG. 4 illustrates an example user interface providing a remaining lifetime value associated with an asset health index for an asset or system, in accordance with at least some example embodiments of the present disclosure;
FIG. 5 illustrates another example user interface providing a remaining lifetime value associated with a particular root cause variable for an asset or system, in accordance with at least some example embodiments of the present disclosure;
FIG. 6 illustrates a flowchart including operational blocks of an example process for monitoring asset remaining useful lifetime, in accordance with at least some example embodiments of the present disclosure;
FIG. 7 illustrates a flowchart including additional operational blocks of an example process for generating at least one remaining lifetime value based on a selected mode in monitoring asset remaining useful lifetime value, in accordance with at least some example embodiments of the present disclosure;
FIG. 8 illustrates a flowchart including additional operational blocks of an example process for providing a trend deviation for at least one root cause variable in monitoring asset remaining useful lifetime value, in accordance with at least some example embodiments of the present disclosure; and
FIG. 9 illustrates a flowchart including additional operational blocks of an example process for providing a remaining lifetime value for at least one root cause variable in monitoring asset remaining useful lifetime value, in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Systems engineers, owners, and operators (collectively "users") often attempt to track operational performance of a particular operational system, and/or asset(s) thereof, for any of a myriad of reasons. Among said reasons, such users often attempt to track operational performance of a particular asset (or plurality of assets) to determine when maintenance of such asset(s) is appropriate. For example, as an asset operates, the operation of the asset and/or changes in one or more circumstances associated with the operation of the asset may cause the asset's performance to begin to deteriorate, with such deterioration continuing until the asset deteriorates so much that it no longer can operate reliably for its intended purpose (e.g., the asset has no remaining useful lifetime). Maintenance of the one or more asset(s) may be performed to extend the lifetime of the asset(s), and/or otherwise to ensure that the operating conditions for the asset(s) remain in desired levels. For example, the user may seek to ensure that certain operating conditions corresponding to particular root cause variables that could cause the asset to stop functioning as intended, resulting in downtime, stay within target threshold(s). By monitoring such root cause variables, the users may initiate maintenance of asset(s) early enough such that the asset(s) do not break, malfunction, or otherwise cease performing as intended. An asset ceasing to perform as intended could cause downtime of the individual asset, or in worse instances could cause downtime of operations of an entire system or plant. Maintaining a consistent uptime, and ideally as high an uptime as possible, is desirable for all assets.

Often, data is collected about operations of a particular asset and may be analyzed by a user to determine whether the asset will remain functioning properly based on that data value individually. In this regard, the user is often relied upon to determine how long an asset will remain useful based on a particular data variable (e.g., a single root cause variable). The inventors have identified multiple problems and inefficiencies associated with conventional implementations for monitoring asset lifetime. For example, manual analysis of such data is often incorrect, resulting in assets having a useful lifetime significantly shorter or longer than determined. In circumstances where the remaining useful lifetime of a particular asset is overestimated, the asset may fail, causing downtime for the asset, system, and/or plant, additional costs associated with fully repairing the asset, and/or indirect problems resulting from the failure (e.g., loss of production). Alternatively, should a user estimate the remaining useful lifetime of an asset to be significantly shorter than it actually is, maintenance may be performed on the asset event though it is not yet required, thus causing additional unnecessary downtime for maintenance and unnecessary additional resource expenditure (e.g., both additional costs and additional man-hours) to accomplish the maintenance.

In an attempt to avoid the deficiencies of conventional methodologies for determining the remaining useful lifetime of a particular asset, maintenance is often performed at routine intervals for particular asset(s). Such routine maintenance, however, faces similar and additional problems and inefficiencies. For example, in a circumstance where routine maintenance is performed for an asset with a significant remaining useful lifetime, such maintenance could result in an unnecessary cost, unnecessary downtime, and/or the like. In circumstances where maintenance of a particular asset is expensive or difficult (e.g., because the asset is difficult to access, or particularly important with respect to operations of a particular system or plant) such unnecessary maintenance can be especially costly and/or time consuming, resulting in particularly detrimental downtime for the asset, system, and/or entire operational system of a plant, for example.

Embodiments of the present disclosure provide for monitoring operational health associated with a particular asset. The operational health associated with a particular asset may be determined from system information obtained from the asset and/or one or more sensors associated with the asset. In this regard, as each batch of system data associated with each asset is received, each batch of system data may be processed to monitor the operational health of the asset based on value(s) for one or more factors represented in or derivable from such system data. For example, the system data may include or be utilized to calculate a value for one or more root cause variables associated with a particular asset.

The operational health of a particular asset may be affected by one or more particular factors embodying root causes for operational anomalies and/or failures of the asset. In this regard, a value for each factor embodying a root cause variable may be determinable from system data received associated with the particular asset. Additionally or alternatively, the root cause variables may each alone or in combination impact the remaining useful lifetime of the asset overall. For example, the remaining useful lifetime may represent the length of time that the asset may continue to operate without maintenance before the asset is no longer expected to operate as intended, and/or a failure is likely to be expected due to one or a combination of root cause variables impacting performance of the asset. The remaining useful lifetime of the asset may be impacted individually by each factor (e.g., each factor may be a sole root cause of a failure or other anomaly) or impacted by the combination of factors (e.g., a combination of factors embodying root cause variables result in a failure or other anomaly).

In some embodiments of the present disclosure, future value(s) for a particular factor, such as a root cause variable associated with a target asset, is/are predicted over a future time interval. Embodiments of the present disclosure may generate an estimated value for some or each particular, individual root cause variable. Additionally or alternatively, particular system data (e.g., sensor data received associated with the target asset) and/or derivations therefrom, such as estimated future value(s) for a particular root cause variable, may be utilized to generate a remaining lifetime value associated with a particular root cause variable and an associated limit threshold. The remaining lifetime value represents a length of time until the value for the root cause variable is determined or otherwise estimated to violate the limit threshold corresponding to the root cause variable, indicating a failure or other operational anomaly is likely to occur due at least in part to the root cause variable. Such embodiments provide estimates indicating when the value for a particular root cause variable is likely to cause a failure or other anomaly in operations of a particular target asset that a user is interested in monitoring. In this regard, the remaining lifetime value may be provided to enable maintenance of a particular aspect of the target asset to be performed before the root cause variable causes downtime of the asset.

Additionally or alternatively, at least some embodiments of the present disclosure generate an estimated value for an asset health index representing an overall operational health of the asset. The asset health index may represent the overall operational health of the target asset based at least on a combination of one or more root cause variables. In this regard, the system data and/or derivations therefrom, such as estimated values for the asset health index, may similarly be utilized to generate a second remaining lifetime value associated with the asset health index. The second remaining lifetime value may be based on the estimated value(s) for the asset health index and an associated limit threshold for the asset health index. The second remaining lifetime value represents a remaining useful lifetime for the target asset overall, for example a remaining time until the combination of one or more root cause variables affecting the asset is likely to cause a downtime from a failure or other operational anomaly of the target asset. Such embodiments provide estimates indicating when the value for the asset health index indicates it is likely that the target asset experiences a failure or other anomaly in the operations due to deterioration of the combination of one or more root cause variables. In this regard, the second remaining lifetime value embodying the remaining useful lifetime for the asset may be provided to enable expedited identification of when a particular asset is likely to fail or experience other operational anomalies without requiring individual, manual analysis of each root cause variable.

The remaining useful lifetime for a particular target asset embodied by an asset health index may provide insight into the overall operational health of one or more asset(s) together with individual insights into the impact of each root cause variable based on the corresponding remaining lifetime value(s) for such root cause variables. For example, the asset health index may be based on any number of root cause variables embodying factors that affect the remaining useful lifetime of the asset. In this regard, each root cause variable may be associated with a lifetime remaining value indicating a time interval until the particular root cause variable will reach and/or exceed a particular predefined threshold (e.g., a threshold that, if reached, indicates the asset is likely to fail due to the root cause variable). The second lifetime remaining value may be generated that represents the remaining useful lifetime of the asset (or asset(s)) overall based on the individual and/or combination of the root cause variables. As such, the remaining useful lifetime represented by the second remaining lifetime value provides a more accurate representation of how long one or more asset(s) may continue to operate as intended without maintenance based on all such factors. Utilizing the generated remaining useful lifetime, maintenance of the asset(s) may be more accurately performed to ensure that the asset(s) do not experience a failure. Similarly unnecessary maintenance may be reduced to increase overall asset and system uptime, while additionally or alternatively conserving resources(e.g., manpower, monetary resources, computing resources, and the like) that would otherwise be wasted on unnecessary maintenance performed based on conventional implementations for monitoring asset health.

One example context includes an individual asset, or a system, affected by pressure, temperature, and load. System data may be collected associated with the asset or system for processing associated with the asset or system. The system data may include real-time sensor data associated with the asset or system that is continuously or at particular time intervals (e.g., every 1 minute, 5 minutes, 30 minutes, hourly, and/or the like). The sensor data may be collected from sensors within the asset or system, positioned in the environment of the asset or system, and/or the like. System data may further include data manually inputted or otherwise collected based on operations of the individual asset or system.

The system data may be processable to determine values for each of root cause variables of pressure, temperature, and load based on the system data. Additionally or alternatively, the system data may be processed to generate, for example utilizing a model, a remaining lifetime value for some or all of the individual root cause variables of pressure, temperature, and/or load. The remaining lifetime value for such individual root cause variables may be generated to represent the time remaining until each individual root cause variable reaches a corresponding limit threshold indicating the value of the root cause variable has reached an unacceptable level (e.g., likely to result in the asset not operating as intended, complete failure, downtime, and/or the like).

Based on the values for the individual root cause variables of pressure, temperature, and/or load, and/or the lifetime remaining value(s) associated with such root cause variables, a second remaining lifetime value embodying a remaining useful lifetime of the individual asset or system may be generated. The second lifetime remaining value embodying the remaining useful lifetime of the asset or system may be generated, for example utilizing a model, that indicates the length of time remaining until the asset or system is likely to fail based on the combination of root cause variables. In this regard, a user or computing system may utilize the remaining useful lifetime embodied by the second remaining lifetime value to accurately determine when to initiate maintenance on the asset or system to minimize or prevent downtime without requiring the user to derive such a determination from the individual root cause variables. Alternatively or additionally, embodiments may provide notifications associated with the maintenance at particular time(s) (e.g., at predetermined intervals before the remaining useful lifetime is determined to reach zero). Such technical improvements and advantages are not provided by conventional implementations for monitoring asset(s) of an operational system.

### Definitions

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The term "asset" refers to a computing device, mechanical device, or system. An asset may include any number of sub-assets.

The term "target asset" refers to an asset embodying a computing or mechanical device or system with which associated data is to be processed to determine operational health of the computing or mechanical device or system.

The term "upstream asset" refers to a second asset of a system whose operations affect operations of a particular target asset. In this regard, operational health of an upstream asset with respect to a particular target asset may affect the operational health of the target asset.

The term "downstream asset" refers to a second asset of a system whose operations are affected by operations of a particular target asset. In this regard, operational health of the target asset may affect the operational health of the downstream asset

The term "mode" refers to a configurable state for a particular asset or system to cause the particular asset or system to perform operations in a particularly defined manner. The term "selected mode" refers to a data value representing a currently utilized mode of a particular asset or system. Non-limiting examples of a mode include a manual mode, an automatic mode, and a hybrid mode, of which the mode that the asset or system is currently configured to utilize represents the selected mode. It should be appreciated that some assets and/or systems do not utilize configurable modes, and other assets and/or systems utilize any number of configurable modes.

The term "operational system" refers to one or more assets configured to operate in conjunction with one another. A non-limiting example of an operational system includes an industrial power plant or manufacturing plant including any number of monitored devices and/or systems to perform the function of the plant.

The term "system data" refers to manually inputted data, automatically derived data, and/or sensor data from and/or associated with a particular asset or system, associated with interactions between assets, associated with an environment of the asset, and/or associated with operations of the asset. System data may include any number of discrete data portions from different inputs.

The term "operational anomaly" refers to an indication of degradation of an asset or degradation of performance of the asset based on system data associated with the asset.

The term "variable" refers to electronically managed data embodying a measured or calculated data signal.

The term "root cause variable" refers to an electronic data representation of any variable whose value is affected by the performance of a particular target asset, or at least one asset that impacts performance of the target asset. A particular target asset may be associated with, any number of root cause variable(s) embodying a measurable and/or determinable factor associated with the operational health of an asset. In some embodiments, a value for a root cause variable is derivable from system data associated with the particular asset. An asset may be manually associated with any number of root cause variables.

The term "asset health index" refers to an electronic data representation of the overall operational health of an asset based on a combination of one or more root cause variables. A value for an asset health index represents the overall operational health of the asset based on one or more root cause variables associated with the asset and/or a combination of root cause variables associated with the asset.

The term "remaining useful lifetime" associated with an asset refers to a time interval for which a target asset is estimated to continue to operate within acceptable parameters without maintenance based on one or more root cause variables.

The terms "limit threshold" refers to a cutoff value for a particular root cause variable or combination of root cause variables that, if violated, indicates an asset is likely to experience a failure or operational anomaly due to the root cause variable or combination of root cause variables.

The term "remaining lifetime value" refers to an electronically managed data value representing a predicted time interval until a value of a root cause variable to reach a limit threshold. In this regard, for a particular target asset associated with one or more root cause variable(s), a different remaining lifetime value is determinable for each root cause variable and a particular limit threshold corresponding to the particular root cause variable.

The term "second remaining lifetime value" refers to an electronically managed data value representing a predicted time interval representing a remaining useful lifetime for a target asset based on any number of root cause variable(s). In some embodiments, a second remaining lifetime value represents the time for an asset health index associated with a combination of root cause variable(s) for a particular target asset to reach a limit threshold corresponding to the asset health index.

The term "model" refers to a statistical, algorithmic, and/or machine learning algorithm or set of algorithms that generates a remaining lifetime value of an asset based on one root cause variable or a combination of each of a plurality of root cause variables.

The term "direct relationship" with respect to one or more root cause variables refers to a relationship between data values indicating that as the value of a first root cause variable or combination of root cause variables increases, the remaining useful lifetime of the asset either always decreased or always increased.

The term "expected trend" refers to an estimated differential in a value between two or more points in time.

The term "actual trend" refers to a determined, non-estimate differential in a value between two or more points in time based on received data.

The term "sensor" refers to physical computing devices embodied in hardware, software, and/or firmware that measure one or more particular value(s) associated with operations of one or more asset(s).

The term "maintenance notification" refers to data indicating a maintenance action should be performed on at least one asset of a system.

### Example Systems of the Disclosure

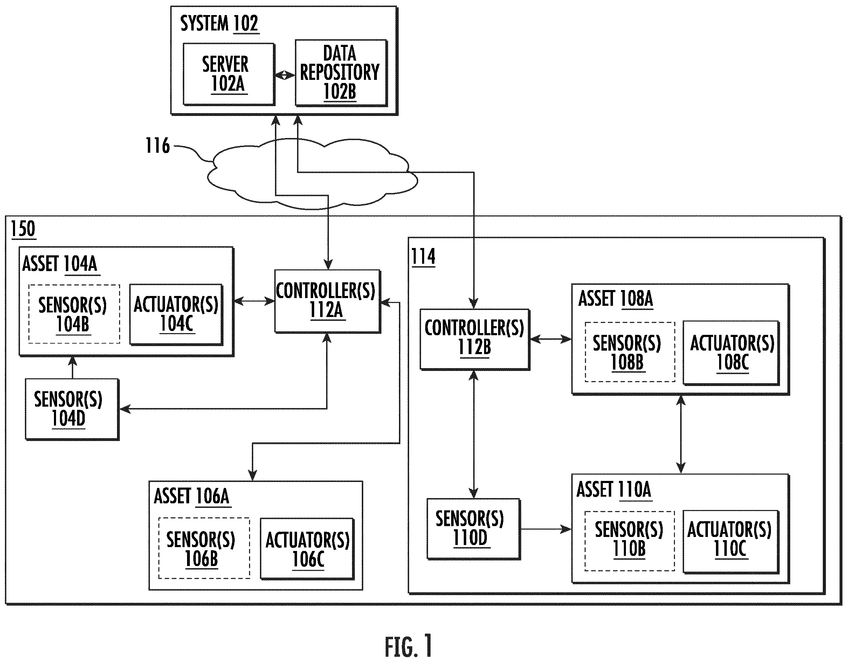

FIG. 1 illustrates a block diagram of a system for monitoring one or more assets that may be specially configured within which embodiments of the present disclosure may operate. Specifically, FIG. 1 depicts a lifetime monitoring system 102 in communication with an operational system 150. In some embodiments, the monitoring system 102 is configured to communicate with each of the depicted computing devices, for example the various assets, systems, and/or associated sensors directly or indirectly through direct communication with another device (e.g., a controller). In other embodiments, for example as depicted, the monitoring system 102 is configured to communicate with one or more computing devices over the communications network 116.

The communications network 116 may embody any of a myriad of network(s) configured to enable communication between two or more computing device(s). In some embodiments, the communications network 116 embodies a private. For example, the monitoring system 102 may be embodied by various computing device(s) on an internal network, such as one or more server(s) of an industrial plant in communication with the various controller(s), asset(s), and/or sensor(s) associated with operating the industrial plant. In some such embodiments, the monitoring system 102 is embodied by computing device(s) proximally located to the industrial plant and/or other computing devices to be monitored, for example within the same plant site or other physical, defined location.

In other embodiments, the communications network 116 embodies a public network, for example the Internet. In some such embodiments, the monitoring system 102 may embody a remote or "cloud" system that accesses the computing devices of the operational system 150 over the communications network 116 from a location separate from the physical location of the operational system 150. For example, the monitoring system 102 may be embodied by computing device(s) of a central headquarters, server farm, distributed platform, and/or the like. In some such embodiments, the monitoring system 102 may be accessed directly (e.g., via a display and/or peripherals operatively engaged with the monitoring system 102), and/or may be accessed indirectly through use of a client device. For example, in some embodiments, a user may login (e.g., utilizing a username and password) or otherwise access the monitoring system 102 to access the described functionality with respect to one or more particular operational system(s), plant location(s), and/or the like. Alternatively or additionally, in some embodiments, the monitoring system 102 is particularly associated with the operational system 150 to provide access specifically to the described functionality with respect to the operational system 150, for example without requiring additional user authentication.

The monitoring system 102 comprises one or more computing devices embodied in hardware, software, firmware, and/or the like, that provide the asset lifetime monitoring functionality desired herein (e.g., monitoring operational health of one or more assets, determining anomalies associated with one or more aspects of the asset, determining one or more remaining lifetime value(s) for one or more root cause variables or a combination of root cause variables, and/or the like). As depicted, the monitoring system includes a server 102A and a data repository 102B may each be embodied by one or more computing devices communicable with one another to provide the functionality described herein.

The server 102A may include one or more computing devices embodied in hardware, software, firmware, and/or the like, configured to intake and/or process data to provide the described functionality. In some embodiments, the server 102A receives system data from or otherwise associated with one or more assets the operational system 150. For example, in some embodiments, the server 102A communicates over the communications network 116 to receive or otherwise collect system data via sensor(s) associated with each asset. Alternatively or additionally, in some embodiments, the server 102A communicates over the communications network 116 directly with one or more asset(s) and/or associated controller(s) to receive system data embodying configurations and/or other data values associated with data properties of the asset(s). Additionally or alternatively still, in some embodiments, the server 102A is configured to process system data to provide various functionality. For example, in some embodiments, the server 102A processes the system data associated with a particular asset to determine, identify, and/or otherwise detect at least one anomaly in operations of the asset based on the system data. Additionally or alternatively, in some embodiments, the server 102A is configured to generate one or more remaining lifetime value(s), for example associated with a root cause variable and/or a combination of root cause variables associated with such at least one anomaly. In some such embodiments, the server 102A is configured to generate one or more of such remaining lifetime value(s) using a model specially configured to process the system data to generate a value for each of root cause variable associated with the at least one anomaly. In this regard, the server 102A may monitor operational health of one or more asset(s) by generating a remaining lifetime value embodying at least a remaining useful lifetime of each of the one or more asset(s), and in some embodiments remaining lifetime value(s) associated with the root cause variable(s) that contribute to the remaining useful lifetime of the asset.

The data repository 102B may include one or more computing devices embodied in hardware, software, firmware, and/or the like, configured to store and/or otherwise maintain data associated with asset lifetime monitoring functionality. In some embodiments, the data repository 102B stores system data associated with one or more asset(s) of one or more operational systems. Additionally or alternatively, in some embodiments, the data repository 102B stores values for one or more root cause variable(s) associated with a particular asset and/or corresponding metadata (e.g., timestamp information embodying when the value was collected or generated, and/or the like). Alternatively or additionally still, in some embodiments, the data repository 102B stores derived data associated with a particular asset, for example a value for a health index associated with a particular asset, a remaining useful lifetime embodying a second lifetime remaining value for the asset based on one or more root cause variables, and/or the like. Alternatively or additionally still, the data repository 102B in some embodiments is configured to store remaining lifetime value(s) associated with an asset, particular root cause variable(s), and/or a combination of root cause variable(s) (for example embodying a remaining useful lifetime of the asset), and/or associated metadata (e.g., timestamp information embodying when the value was collected or generated, and/or the like).

In some embodiments, for example, the data repository 102B may be embodied by one or more database servers, memory devices, and/or the like, configured for storing such system data. In some embodiments, the data repository 102B includes one or more remote or "cloud" databases accessible over one or more networks, such as the communications network 116 or a separate communications network (e.g., the Internet).

The operational system 150 includes a plurality of sub-systems and assets that provide particular functionality, for example functionality associated with operations of a particular industrial plant. As illustrated, the operational system 150 includes assets 104A, 106A, 108A, and 110A. The operational system 150 further includes various sensors associated with the various assets, including sensors separate or otherwise external from the individual assets such as sensor(s) 104D and sensor(s) 110D. In some embodiments, the various sensors further embody assets for which data is collected and/or processed the monitoring system 102. The operational system 150 further includes system 114 that embodies a sub-system of the operational system 150 and includes a plurality of associated computing devices that operate in conjunction to perform particular functionality. In some embodiments, the sub-system 114 further embodies assets for which data is collected and/or processed by the monitoring system 102. The operational system 150 further includes controller(s) 112A and controller(s) 112B communicable with various other assets of the operational system 150. In some embodiments, the controller(s) 112A and/or controller(s) 112B each embody assets for which data is collected and/or processed by the monitoring system 102.

The operational system 150 includes one or more controller(s), specifically controller(s) 112A and controller(s) 112B. Each controller may be embodied by one or more computing devices embodied in hardware, software, firmware, and/or the like, that provides activation and/or other input signals to each of the assets. Non-limiting examples of such controllers include programmable logic controllers, proportional controllers, derivative controllers, and the like. Each controller may be configured to activate and/or otherwise initiate operation of one or more asset(s) communicable with or otherwise configured to be controlled by the controller. For example, as illustrated, controller(s) 112A control each of the assets 104A and 106A, as well as the external sensors 104D associated with the asset 104A. Controller(s) 112B control each of the assets of the sub-system 114, specifically assets 108A and 110A together with external sensors 110D corresponding to asset 110A.

Each of the assets 104A, 106A, 108A, and 110A may embody various components that operate to provide particular functionality. In an example context, each of the assets embodies a computing device of one or more systems for operation of a residential building (e.g., HVAC assets, security assets, and/or the like). In another example context, each of the assets embodies a computing device of one or more systems for operation of a manufacturing plant (e.g., manufacturing machinery, conveyor belts, and/or the like). The system 114 may include a plurality of sub-assets that operate and/or are controlled together, are housed together, or otherwise operate in conjunction with one another as part of a larger sub-system.

Each of the assets 104A, 106A, 108A, and 110A may include one or more actuator(s) 104C, 106C, 108C, and 110C. The actuator(s) 104C, 106C, 108C, and 110C may each be activated to operate each of the corresponding assets. For example, the actuator(s) 104C may be activated and/or otherwise manipulated to operate the asset 104. Similarly, the actuator(s) 108C may be activated and/or otherwise manipulated to operate the asset 108. In this regard, each of the assets 104A, 106A, 108A, and 110A may be activated via the corresponding actuator(s) to accomplish one or more operations performed by the asset.

Each of the assets 104A, 106A, 108A, and 110A optionally may include or otherwise are associated with one or more internal sensor(s), for example embodied by the sensor(s) 104B, 106B, 108B, and/or 110B. Each of the sensor(s) 104B, 106B, 108B, and/or 110B may monitor one or more aspects of the operational health of the corresponding asset 104A, 104A, 106A, or 110A, respectively. For example, such sensor(s) may include a temperature sensor, a pressure sensor, a gas sensor, and/or the like. Each of the sensor(s) for a particular asset may monitor the value of one or more particular data properties embodying a root cause variable associated with operation of the corresponding asset. Data values from the sensor(s) may be collected continuously, at set or predefined time intervals (e.g., every minute, every 5 minutes, hourly, and/or the like). In this regard, the sensor(s) may be utilized to collect values for root cause variable(s) associated with the corresponding asset in real-time at one or more desired times.

One or more assets may optionally be associated with one or more sensors external to the asset itself. For example, as depicted, sensor(s) 110D are associated with asset 110A such that the sensor(s) 110D monitor one or more aspects of the operational health of asset 110A. Similarly, as depicted, the sensor(s) 104D are associated with asset 104A such that the sensor(s) 104D monitor one or more aspects of the operational health of asset 104A. The external sensor(s) may each monitor one or more aspects of the corresponding asset itself, or of the environment surrounding or otherwise associated with the asset. For example, the sensor(s) 104D may monitor the temperature environment of the asset 104A, or may monitor the concentration of a poisonous gas in the environment of the asset 104A. In this regard, such external sensor(s) may provide system data embodying such values for root cause variables corresponding to data properties monitored by the sensor(s). The system data embodying such values may be provided to the monitoring system 102 for storing and/or further processing as described herein.

According to the invention one or more assets is associated with at least one upstream asset and at least one downstream asset. A particular asset is associated with at least one upstream asset whose operational health impacts the particular asset. Additionally, a particular asset is associated with at least one downstream asset, such that the operational health of the particular asset impacts the operational health of the downstream asset. It should be appreciated that a particular asset may be tagged with one or more data values that indicate associations between assets, for example which assets are upstream or downstream assets from one another. In some embodiments, one or more assets of a system are upstream and/or downstream with respect to one another, for example in circumstances where assets of a system operate in a particularly defined order to provide particular functionality. In some embodiments, the upstream asset controls and/or otherwise activates the downstream asset.

As illustrated, for example, asset 110A embodies a downstream asset with respect to asset 108A. Similarly, asset 108A represents an upstream asset with respect to asset 110A. In this regard, operational deficiencies or failure of the asset 108A may affect the operational health of the asset 110A. In this regard, for example, root causes of at least one anomaly in the operation of the asset 108A may similarly impact operations of the asset 110A, and/or operational deficiency or failure of the asset 108A affects the operational health of the asset 110A. For example, in some embodiments, the asset 108A activates or otherwise controls the asset 110A, such that operational deficiencies of the asset 108A similarly cause control of the asset 110A to become deficient. In other embodiments, the controller(s) 112B independently controls the asset 108A in addition to the asset 110A.

### Example Apparatuses of the Disclosure

The methods, apparatuses, systems, and computer program products of the present disclosure may be embodied by any variety of devices. For example, a method, apparatus, system, and computer program product of an example embodiment may be embodied by a fixed computing device, such as a personal computer, computing server, computing workstation, or a combination thereof. Further, an example embodiment may be embodied by any of a variety of mobile terminals, mobile telephones, smartphones, laptop computers, tablet computers, or any combination of the aforementioned devices.

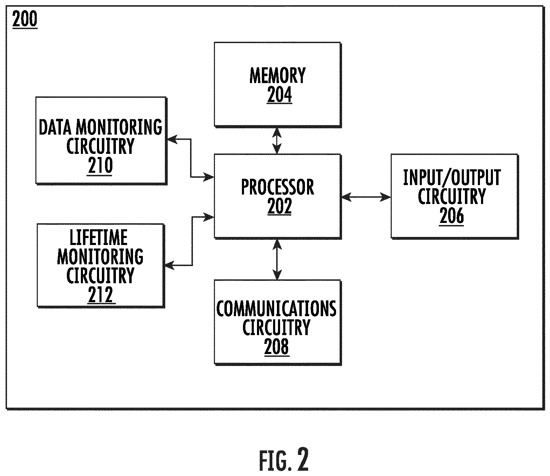

In at least one example embodiment, the monitoring system 102 is embodied by one or more computing systems, such as the lifetime monitoring apparatus 200 as shown in FIG. 2. The lifetime monitoring apparatus 200, as depicted, includes a processor, memory 204, input/output circuitry 206, communications circuitry 208, data monitoring circuitry 210, and lifetime monitoring circuitry 212. Although the components are described with respect to functional limitations, it should be understood that the particular implementations necessarily include the use of particular hardware. It should also be understood that certain of the components described herein in some embodiments include similar or common hardware. For example, in some embodiments two sets of circuitry both leverage use of the same processor, network interface, storage medium, or the like to perform their associated functions, such that duplicate hardware is not required for each set of circuitry. The use of the term "circuitry" as used herein with respect to components of the lifetime monitoring apparatus 200 should therefore be understood to include particular hardware configured to perform the functions associated with the particular set of circuitry as described herein.

Additionally or alternatively, the term "circuitry" should be understood broadly to include hardware and, in some embodiments, software and/or firmware for configuring the hardware. For example, in some embodiments, "circuitry" refers to and/or includes processing circuitry, storage media, network interfaces, input/output devices, and the like. In some embodiments, other elements of the lifetime monitoring apparatus 200 provide or supplement the functionality of the particular circuitry. For example, in some embodiments the processor 202 provide processing functionality, the memory 204 provides storage functionality, the communications circuitry 208 provides network interface functionality, and the like, to one or more of the other sets of circuitry.

In some embodiments, the processor 202 (and/or co-processor or any other processing circuitry assisting or otherwise associated with the processor) is in communication with the memory 204 via a bus for passing information among components of the apparatus. The memory 204 is non-transitory and in some embodiments includes, for example, one or more volatile and/or non-volatile memories. In other words, for example in some embodiments, the memory embodies a non-transitory electronic storage device (e.g., a computer readable storage medium). In some embodiments, the memory 204 is configured to store information, data, content, applications, instructions, or the like, for enabling the lifetime monitoring apparatus 200 to carry out various functions in accordance with example embodiments of the present disclosure. In some embodiments, for example, the memory 204 embodies one or more databases for storing user data objects, electronic data objects, and/or other data associated therewith, and/or otherwise is configured to maintain such data objects for accessing and/or updating as described herein.

In various embodiments of the present disclosure, the processor 202 is embodied in any one of a myriad of ways and may, for example, include one or more processing devices configured to perform independently. Additionally or alternatively, the processor 202 may include one or more processors configured in tandem via a bus to enable independent execution of instructions, pipelining, and/or multithreading. The use of the terms "processor," "processing module," and "processing circuitry" may be understood to include a single-core processor, a multicore processor, multiple processors internal to the apparatus, other central processing unit ("CPU"), microprocessor, integrated circuit, and/or remote or "cloud" processors.

In an example embodiment, the processor 202 is configured to execute computer-coded instructions stored in the memory 204 or otherwise accessible to the processor. Alternatively, or additionally, in some embodiments, the processor 202 is configured to execute hard-coded functionality. As such, whether configured by hardware or software means, or by a combination thereof, the processor 202 may represent an entity (e.g., physically embodied in circuitry) capable of performing operations according to an embodiment of the present disclosure while configured accordingly. Alternatively or additionally, in another example context, when the processor is embodied as an executor of software instructions, the instructions specifically configure the processor 202 to perform the algorithms and/or operations described herein when the instructions are executed.

As one example context, the processor 202 is configured to support asset lifetime monitoring functionality. In some such embodiments, for example, the processor 202 is configured to receive system data associated with an operational system comprising a target asset. Additionally or alternatively, in some embodiments, the processor 202 is configured to determine at least one operational anomaly associated with the operational system based on at least the received system data. Additionally or alternatively, in some embodiments, the processor 202 is configured to identify at least one root cause variable associated with the at least one operational anomaly. Additionally or alternatively, in some embodiments, the processor 202 is configured to generate a first remaining lifetime value associated with one or more of the at least one root cause variable, each of the root cause variables associated with the target asset. For example, the processor 202 may access and/or otherwise utilize a model configured to generate the first remaining lifetime value. Additionally or alternatively, in some embodiments, the processor 202 is configured to generate a second remaining lifetime value associated with an asset health index, for example where the second remaining lifetime value embodies a remaining useful lifetime associated with the target asset. For example, the processor 202 may access and/or otherwise utilize a model configured to generate the second remaining lifetime value, in some embodiments which is similarly configured to generate the first remaining lifetime value. Additionally or alternatively, in some embodiments, the processor 202 is configured to provide at least the second remaining lifetime value, for example the second remaining lifetime value based on at least the first remaining lifetime value.

In some embodiments, the lifetime monitoring apparatus 200 includes input/output circuitry 206 that, alone or in communication with processor 202, provides output to the user and/or receives indication(s) of user input. In some embodiments, the input/output circuitry 206 comprises one or more user interfaces, and/or includes a display to which user interface(s) may be rendered. In some embodiments, the input/output circuitry 206 comprises a web user interface, a mobile application, a desktop application, a linked or networked client device, and/or the like. In some embodiments, the input/output circuitry 206 also includes any of a number of peripherals, a keyboard, a mouse, a joystick, a touch screen, touch areas, soft keys, a microphone, a speaker, or other input/output mechanisms. In some such embodiments, the input/output mechanisms are configured to enable a user to provide data representing one or more user interaction(s) for processing by the lifetime monitoring apparatus 200. The processor and/or input/output circuitry 206 communicable with the processor, for example processor 202, is configured to control one or more functions of one or more user interface elements through computer program instructions (e.g., software and/or firmware) stored on a memory accessible to the processor (e.g., memory 204, and/or the like).

In some embodiments, the lifetime monitoring apparatus 200 includes data monitoring circuitry 210. The communications circuitry 208 in embodied by any means such as a device or circuitry embodied in either hardware or a combination of hardware and software that is configured to receive and/or transmit data from/to a network and/or any other device, circuitry, or other module in communication with the lifetime monitoring apparatus 200. In this regard, the communications circuitry 208 includes, in some embodiments for example, at least a network interface for enabling communications with a wired or wireless communications network. For example, in some embodiments, the communications circuitry 208 includes one or more network interface cards, antennas, buses, switches, routers, modems, and supporting hardware and/or software, or any other device suitable for enabling communications via a network. Additionally or alternatively, the communication interface may include the circuitry for interacting with the antenna(s) to cause transmission of signals via the antenna(s) or to handle receipt of signals received via the antenna(s).

The data monitoring circuitry 210 includes hardware, software, firmware, and/or a combination thereof, configured to support data gathering and storing functionality associated with asset lifetime monitoring functionality of the lifetime monitoring system 102. The data monitoring circuitry 210, in some embodiments, utilizes processing circuitry such as the processor 202 to perform one or more of these actions. Additionally or alternatively, the data monitoring circuitry 210, in some embodiments, utilizes one or more portions of communications circuitry, such as some or all of the communications circuitry 208, to communicate with one or more other computing devices and/or receive data from such computing devices.

In some embodiments, the data monitoring circuitry 210 includes hardware, software, firmware, and/or a combination thereof, to receive system data. The data monitoring circuitry 210 may receive system data from one or more sensor(s) associated with one or more asset(s), from controller(s) associated with one or more asset(s), from the asset(s) directly, and/or the like. In some embodiments, the data monitoring circuitry 210 includes hardware, software, firmware, and/or a combination thereof to request and/or receive such system data, for example in real time. Additionally or alternatively, in some embodiments the data monitoring circuitry 210 includes hardware, software, firmware, and/or a combination thereof, to automatically receive system data, for example in real time at particular timestamp intervals (e.g., every minute, every 5 minutes, every hour, and/or the like) or continuously. Additionally or alternatively, in some embodiments, the data monitoring circuitry 210 includes hardware, software, firmware, and/or a combination thereof, to store and/or maintain the system data and/or data derived therefrom in one or more repositories. In some embodiments, for example, the data monitoring circuitry 210 includes software, hardware, firmware, and/or a combination thereof, to store system data as received in a first data repository for storing such data maintained on or otherwise accessible to the lifetime monitoring apparatus 200, and/or remaining lifetime value(s) associated with particular asset(s) in a second data repository for storing such derived data maintained on or otherwise accessible to the lifetime monitoring apparatus 200. It should be appreciated that, in some embodiments, the data monitoring circuitry 210 includes or is embodied by a separate processor, specially configured field programmable gate array (FPGA), and/or a specially configured application-specific integrated circuit (ASIC).

The lifetime monitoring circuitry 212 includes hardware, software, firmware, and/or a combination thereof, configured to support associated with the lifetime monitoring system 102. The lifetime monitoring circuitry 212 in some embodiments utilizes processing circuitry such as the processor 202 to perform one or more of these actions.

In some embodiments, the lifetime monitoring circuitry 212 includes hardware, software, firmware, and/or a combination thereof, to determine at least one anomaly associated with a target asset based on received system data associated with the target asset. In some such embodiments, the lifetime monitoring circuitry 212 includes hardware, software, firmware, and/or a combination thereof, to retrieve received system data associated with one or more asset(s) from a particular data repository or data repositories maintained by or accessible to the lifetime monitoring apparatus 200. Additionally or alternatively, in some embodiments, the lifetime monitoring circuitry 212 includes hardware, software, firmware, and/or a combination thereof, to identify at least one root cause variable associated with each of the at least one anomaly. Additionally or alternatively, in some embodiments, the lifetime monitoring circuitry 212 includes hardware, software, firmware, and/or a combination thereof, to generate a lifetime remaining value for each of the at least one root cause variables, for example where each generated remaining lifetime value represents a time to reach a particular threshold value associated with the root cause variable. In some embodiments, the lifetime monitoring circuitry 212 generates each lifetime remaining value utilizing a model specially configured to generate such a lifetime remaining value.

Additionally or alternatively, in some embodiments, the lifetime monitoring circuitry 212 includes hardware, software, firmware, and/or a combination thereof, to generate a second lifetime remaining value for an asset health index associated with a target asset, for example where the second lifetime remaining value represents a remaining useful lifetime of the target asset as a whole. In some embodiments, the second lifetime remaining value is generated based on a combination of one or more root cause variables, for example based on the values for each of the combination of one or more root cause variables and/or based on the first remaining lifetime value for each root cause variable. In some embodiments, the lifetime monitoring circuitry utilizes a model to generate the second lifetime remaining value for a target asset, for example in some embodiments the same model configured to generate the first lifetime remaining value for each root cause variable.

Additionally or alternatively, in some embodiments, the lifetime monitoring circuitry 212 includes hardware, software, firmware, and/or a combination thereof, to provide the second lifetime remaining value associated with a target asset, and/or one or more first lifetime remaining value associated with a target asset. In some embodiments, the lifetime monitoring circuitry 212 includes hardware, software, firmware, and/or a combination thereof, to cause rendering of an interface associated with and/or otherwise including a remaining lifetime value to provide such lifetime value. Additionally or alternatively, in some embodiments, the lifetime monitoring circuitry 212 includes hardware, software, firmware, and/or a combination thereof, to transmit one or more specially configured transmissions including a remaining lifetime value to provide such remaining lifetime value, for example to a second device for further processing and/or display.

Additionally or alternatively, in some embodiments, the lifetime monitoring circuitry 212 includes hardware, software, firmware, and/or a combination thereof, to determine a selected mode of associated with a target asset for use in generating a first remaining useful lifetime and/or for use in generating a second remaining useful lifetime associated with the target asset.

Additionally or alternatively, in some embodiments, the lifetime monitoring circuitry 212 includes hardware, software, firmware, and/or a combination thereof, to further process one or more first lifetime remaining value and/or second lifetime remaining value associated with a target asset. In some embodiments, for example, the lifetime monitoring circuitry 212 includes hardware, software, firmware, and/or a combination thereof, to initiate a maintenance notification based on the second remaining lifetime value. Additionally or alternatively, in some embodiments, the lifetime monitoring circuitry 212 includes hardware, software, firmware, and/or a combination thereof, to initiate, according to the invention, one or more maintenance and repair processes based on a first remaining lifetime value and a second remaining lifetime value. It should be appreciated that, in some embodiments, the lifetime monitoring circuitry 212 includes or is embodied by a separate processor, specially configured field programmable gate array (FPGA), and/or a specially configured application-specific integrated circuit (ASIC).

In some embodiments, one or more of the aforementioned sets of circuitry are combined to form a single set of circuitry. The single combined set of circuitry may be configured to perform some or all of the functionality described herein with respect to the individual sets of circuitry. For example, in at least one embodiment, the data monitoring circuitry 210 and the lifetime monitoring circuitry 212 are embodied by a single set of circuitry, and/or one or more of the data monitoring circuitry 210 and/or the lifetime monitoring circuitry 212 are combined with the processor 202. Additionally or alternatively, in some embodiments, one or more of the sets of circuitry described herein is/are configured to perform one or more of the actions described with respect to one or more of the other sets of circuitry.

### Example Data Visualizations of the Disclosure

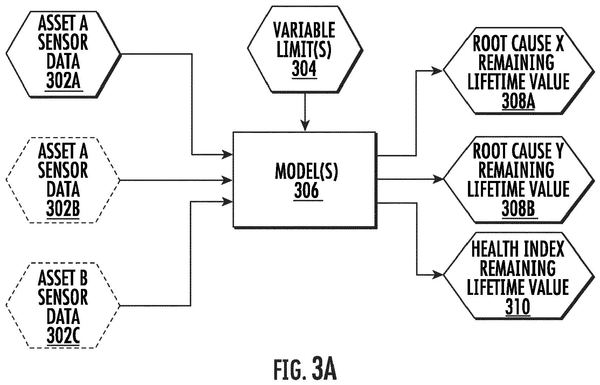

FIG. 3A illustrates a visualization of an example computing environment for generating remaining lifetime value(s) using a model, in accordance with at least some example embodiments of the present disclosure. In this regard, the example computing environments and various data described associated therewith may be maintained by one or more computing devices, such as the lifetime monitoring apparatus 200. The lifetime monitoring apparatus 300, for example, may be specially configured via hardware, software, firmware, and/or a combination thereof, to maintain each of the depicted data elements and to process the data elements as depicted and described.

The computing environment illustrated with respect to FIG. 3A is configured to generate one or more lifetime remaining value(s) from system data associated with at least a target asset of an operational system. In this regard, the computing environment may be configured to perform an example process for providing asset lifetime monitoring functionality. For example, remaining lifetime values for individual root cause variables associated with one or more anomalies of a particular target asset may be generated, and/or a second lifetime remaining value for an asset health index associated with a particular target asset may be generated. In this regard, the second lifetime remaining value associated with the asset health index for the target asset provides insight as the overall remaining useful lifetime of the target asset, and each first remaining lifetime value for the root cause variables provide insight as to the individual factors affecting the remaining useful lifetime of the target asset in a circumstance where such further insight with respect to the operational health of the target asset is desired.

As illustrated, the system data includes a plurality of sensor data 302A-302C (collectively, "system data 302"). The system data 302 may be received from any number of sensors and/or other computing devices associated with or otherwise embodying an asset at any of a myriad of times for processing. For example, in some embodiments, the system data 302 is received in real-time over a particular timestamp interval. The values of such real-time data may be temporarily stored and/or processed over the particular timestamp interval (e.g., 1 minute, 5 minutes, or the like) to determine a processed value (e.g., an average value, weighted average value, or other algorithmically determined value) for the particular data received over the particular timestamp interval. The processed value may be stored for further processing over a second timestamp interval, for example for processing over a longer period of time (e.g., hours, days, permanently, and/or the like). In this regard, it should be appreciated that each individual data value of the received system data, such as the system data 302, need not be processed directly by the one or more model(s) described herein.

As depicted, the system data 302 includes a plurality of sensor data associated with a target asset (e.g., asset A) and/or associated asset(s) (e.g., asset B). Specifically, the system data 302 includes asset A sensor data 302A, asset A sensor data 302B, and asset B sensor data 302C. Asset A sensor data 302A may embody received system data associated with a first sensor of asset A (e.g., a temperature sensor). Asset A sensor data 302B may embody received system data associated with a second sensor of asset A (e.g., a vibrations sensor). Asset B sensor data 302C may embody received system data associated with a first sensor of asset B, for example where asset B is an upstream or downstream asset with respect to asset A.

It should be appreciated that, in some embodiments, data of a single source is processed, for example where only asset A sensor data 302A is processed by one or more particular models for purposes of determining one or more lifetime remaining value(s). In other embodiments, a plurality of data from different sources is processed, for example where data from multiple sensors of a particular asset are processed (e.g., asset A sensor data 302A and asset A sensor data 302B) and/or data from multiple sensors associated with different assets are processed (e.g., asset A sensor data 302A and asset B sensor data 302C). In some such embodiments, additional system data (e.g., 302B and 302C) may not be received and/or processed, and is otherwise optional.

The system data 302 may be processed by one or more model(s) 306. The model(s) 306 may be stored and/or otherwise maintained by the lifetime monitoring apparatus 200. Alternatively or additionally, in some embodiments, the model(s) 306 may be made accessible to the lifetime monitoring apparatus 200 without storing the model(s) 306 directly on the lifetime monitoring apparatus 200. In some embodiments, the model(s) 306 are trained by a separate computing device and stored to the lifetime monitoring apparatus 200 for subsequent use. In other embodiments, one or more of the model(s) 306 is trained by the lifetime monitoring apparatus 200.

The model(s) 306 may include one or more models configured to detect anomalies in operations of the target asset and/or generate one or more remaining lifetime value(s) associated with operations of the target asset. For example, in some embodiments, model(s) 306 includes a first model configured to detect at least one anomaly in operations of the target asset from the system data 302. The first model may embody a machine learning model, algorithmic model, and/or statistical model, or combination thereof, that is specially trained to identify such anomalies from the system data 302. In some embodiments, the first model configured for anomaly detection may be specially trained based on a data corpus associated with the target asset and/or similar assets that indicate instances where an anomaly has occurred in operations of the target asset. Each identified anomaly in operations of the target asset may be identified as associated with one or more root cause variables corresponding to factors influencing or otherwise causing the anomaly in operations. In some embodiments, the root cause variable for a particular identified anomaly is predetermined. In other embodiments, at least one of the model(s) 306 (e.g., the first model for anomaly detection or an additional associated model) determines the root cause variables associated with an identified anomaly in operation of the target asset.

The model(s) 306 may additionally or alternatively include one or more models configured to generate one or more lifetime remaining value(s) based on the identified at least one anomaly and/or corresponding root cause variables. For example, in some embodiments, model(s) 306 includes a second model configured to generate a first lifetime remaining value representing the time for a value of a particular root cause variable to reach a limit threshold. In this regard, the second model may be utilized to generate a first remaining lifetime value for each root cause variable associated with a detected anomaly. The remaining lifetime value associated with a particular root cause variable may be generated by the second model based on a particular threshold value, for example embodied by the variable limit(s) 304. In this regard, a particular root cause variable may be associated with a particular limit threshold of the variable limit(s) 304 that represents an unacceptable limit for a particular measurable value associated with operation of a target asset. Each threshold of the variable limit(s) 304 may be predetermined, user set, and/or determined by one or more algorithms, models, and/or the like. The second model may utilize the variable limit(s) 304 to generate the first remaining lifetime value corresponding to each root cause variable based on a model-estimated projected length of time until the value of the root cause variable reaches a limit threshold represented by the variable limit(s) 304 corresponding to the root cause variable.

As illustrated, for example, the model(s) 306 generates a first remaining lifetime value for root cause X, specifically root cause X remaining lifetime value 308A, and generate a first remaining lifetime value for root cause Y, specifically root cause Y remaining lifetime value 308B. The root cause X remaining lifetime value 308A may embody a time interval until the value of a particular root cause X associated with a particular operational anomaly of a target asset (e.g., temperature of the target asset) reaches a corresponding temperature threshold represented in the variable limit(s) 304. The temperature threshold, for example represented by a first value in the variable limit(s) 304, may embody an unacceptable temperature limit, such that operation of the asset above the temperature threshold is determined to be unacceptable. It should be appreciated that the model(s) 306 may generate the root cause X remaining lifetime value 308A based on historical system data associated with the root cause X (e.g., temperature), for example including the system data 302 and/or retrieved historical system data associated with target asset. In this regard, in some embodiments, one or more particular portions of the system data are utilized in generating the root cause X remaining lifetime value 308A (e.g., only data values for data properties relevant to the temperature of the target asset and/or associated upstream or downstream assets).

The root cause Y remaining lifetime value 308B may embody a time interval until the value of a particular root cause Y associated with a particular operational anomaly of a target asset (e.g., vibration of the target asset) reaches a corresponding vibration threshold represented in the variable limit(s) 304. The vibration threshold, for example, represented by a second value in the variable limit(s) 304, may embody an unacceptable vibrations limit, such that operation of the asset above the vibrations threshold is determined to be unacceptable. It should be appreciated that the model(s) 306 may generate the root cause Y remaining lifetime value 308B based on historical system data associated with the root cause Y (e.g., vibration), for example including one or more portions of the system data 302 and/or retrieved historical system data associated with the target asset. It should be appreciated that the particular portions of system data relevant to the root cause X remaining lifetime value 308A and the particular portions of system data relevant to the root cause Y remaining lifetime value 308B may differ. For example, data from a first sensor or set of sensors may be processed or highly weighted as relevant for generating the root cause X remaining lifetime value 308A, and data from a second sensor or second set of sensors may be processed or highly weighted as relevant for generating the root cause Y remaining lifetime value 308B.

Additionally or alternatively, the model(s) 306 may include one or more models configured to generate a second remaining lifetime value representing the remaining useful lifetime of a target asset. For example, the model(s) 306 may process at least the system data 302 to generate a health index remaining lifetime value 310. The health index remaining lifetime value 310 may represent a remaining useful lifetime of the target asset based on a combination of root cause variables, such as the root cause X and the root cause Y. In some embodiments, the health index remaining lifetime value 310 representing the remaining useful lifetime is based on a limit threshold for the asset health index that, if not satisfied, indicates the target asset will no longer operate as intended or desired. For example, an asset health index threshold may be maintained by the lifetime monitoring apparatus 200 for comparison with a value of the asset health index at one or more times.

In some embodiments, the same model(s) utilized to generate a remaining lifetime value for one or more root cause variables is utilized to generate the second remaining lifetime value representing the remaining useful lifetime. For example, in some embodiments, an ensemble model is utilized to select a particular model to utilize in generating both the root cause X remaining lifetime value 308A and the health index remaining lifetime value. In this regard, it should be appreciated that the a single model may be trained and utilized to generate each of the first remaining lifetime value and the second remaining lifetime value.

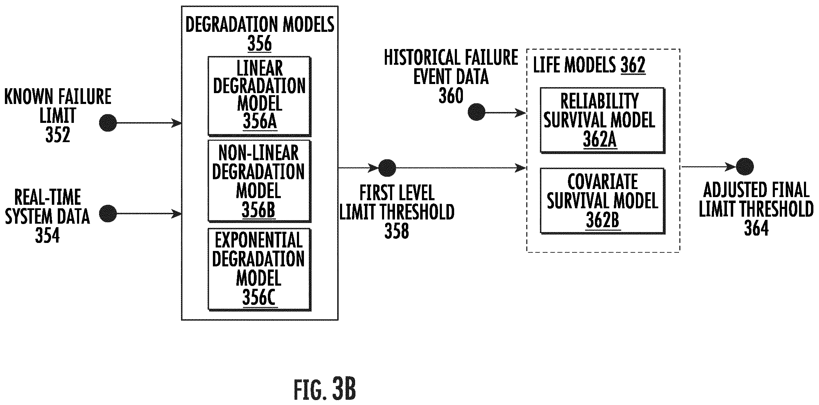

FIG. 3B illustrates a visualization of an example computing environment for generating a root cause limit threshold for a root cause variable, in accordance with at least some example embodiments of the present disclosure. The example computing environment depicted with respect to FIG. 3B may similarly be maintained by the lifetime monitoring apparatus 200. In this regard, the lifetime monitoring apparatus 200 may perform the various data processing and interactions described with respect to FIG. 3B to generate a value embodying a root cause limit threshold for a particular root cause variable.

As illustrated, a first level limit threshold 358 is generated utilizing one or more degradation models 356. The degradation models 356 receive input including a known failure limit 352 and real-time system data 354. The known failure limit 352 may embody a determined and/or otherwise known value for a particular root cause variable that, if surpassed, is likely to cause the target asset to fail (e.g., cease operating in a standard manner and as intended). The known failure limit 352 may be determined based on previously received system data associated with operations of the target asset, user input indicating the known failure limit 352, and/or the like. For example, in some embodiments, historical data maintained by or otherwise accessible to the lifetime monitoring apparatus 200 that was measured during a time when the asset and/or associated assets were known to be operating as intended (e.g., immediately after maintenance of one or more assets) is accessed to calculate the known failure limit 352 for one or more individual root cause variables and/or an asset health index, for example embodying a combination of one or more root cause variables.

The real-time system data 354 may be received and/or otherwise measured from the target asset and/or associated assets. For example, in some embodiments, the real-time system data 354 is received in real-time from sensors in or operatively coupled with the target asset for measuring particular data values associated with operations of the target asset. In some embodiments, the real-time system data 354 is processed to generate subsets of the real-time system data 354 determined as similar based on one or more shared properties. In this regard, the system data 354 may be subset such that similar data is utilized for subsequent operations, such as for generating root cause variable limit threshold(s) and/or for generating lifetime remaining value(s) as described herein. In one example context, for example, the real-time system data 354 is subset based on operation mode of the target asset.

The degradation models 356 may include any number of possible models utilized to capture different types of degradation. For example, as illustrated, the degradation models 356 includes linear degradation model 356A, non-linear degradation model 356B, and exponential degradation model 356C. It should be appreciated that the degradation models 356 may include any number of degradation models configured to account for a different type of degradation. One of the degradation models 356 may be selected for use in generating a root cause limit threshold, for example based on a determination of which degradation model 356 is associated with the most accurate fit of test data.

In some embodiments, the determination of which degradation model 356 to utilize occurs for each newly received batch of real-time system data 354. In this regard, for different batches of real-time system data 354 associated with the same root cause variable (e.g., different batches of temperature data), a different type of degradation model 356 may be selected for use. For example, in some embodiments, the particular degradation model or type of degradation model may be updated to whatever best fits the trend of the value for the root cause variable, such that as the trend of the actual value for the root cause variable is updated the corresponding selected type of degradation model may be selected that best fits the updated trend.

The selected degradation model of the degradation models 356 may be utilized to generate a first level limit threshold 358 associated with the root cause variable. In some embodiments, the first level limit threshold 358 is utilized as the root cause limit threshold for the particular root cause variable without subsequent processing. In other embodiments, the first level limit threshold 358 is further processed to generate an adjusted final limit threshold 364 for use as the root cause limit threshold for the root cause variable.

As illustrated, for example in some embodiments, the first level limit threshold 358 is further processed utilizing one or more life models 362 to generate the adjusted final limit threshold 364 for use. In some embodiments, the first level limit threshold 358 is utilized as input together with historical failure event data 360 for the life models 362 to generate the adjusted final limit threshold 364. In this regard, the historical failure event data 360 embody data indicating circumstances where the target asset has failed, and corresponding values for one or more root cause variables during such events. In this regard, the life models 362 may adjust the first level limit threshold 358 based on the historical failure event data 360 to account for the specific data values for the root cause variable and/or other root cause variables in the historical failure event data 360.

In some embodiments, for example, the first level limit threshold 358 and historical failure event data 360 is processed by a reliability survival model 362A. The reliability survival model 362A may embody one or more statistical, algorithmic, and/or machine learning models configured to determine a value for the root cause variable that, if exceeded (or in other circumstances, if the value falls below) the target asset is determined unlikely to perform reliably. For example, the reliability survival model 362A may determine whether the first level limit threshold 358 sufficiently captures all or a particular target percentage of the failure events embodied in the historical failure event data 360, and adjust the limit threshold if not. In this regard, in some embodiments, the first level limit threshold 358 may be adjusted towards, or set to equal, the limit threshold determined from the historical failure event data 360 and first level limit threshold 358 via the reliability survival model 362A.

In some embodiments, for example, the first level limit threshold 358 and historical failure event data 360 is processed by a covariate survival model 362B. The covariate survival model 362B may embody one or more statistical, algorithmic, and/or machine learning models configured to determine adjust the first level limit threshold 358 for the root cause variable based on relationships between the root cause variable and one or more other root cause variables. In this regard, for example, the covariate survival model 362B may determine, for example based on at least the historical failure event data 360, that the limit threshold for the root cause variable should be adjusted based upon a relationship with a second root cause variable. In one particular context, a direct relationship may be determined indicating that as the value of a first root cause variable increases, the target asset is more likely to fail at a lower value of a second root cause variable. Such relationships between multiple root cause variables may be determined by the covariate survival model 362B for any number and/or combination of root cause variables.

In some embodiments, the lifetime monitoring apparatus 200 stores and/or otherwise maintains the adjusted final limit threshold 364 associated with the corresponding root cause variable. In this regard, the lifetime monitoring apparatus 200 may store the adjusted final limit threshold 364 as the root cause limit threshold for the corresponding root cause variable. For example, the lifetime monitoring apparatus 200 may utilize the stored adjusted final limit threshold 364 for determining the first remaining lifetime value representing a time to reach the root cause limit threshold associated with the root cause variable, and/or a second remaining lifetime value representing the remaining useful lifetime for the target asset based on a health index associated with the target asset.

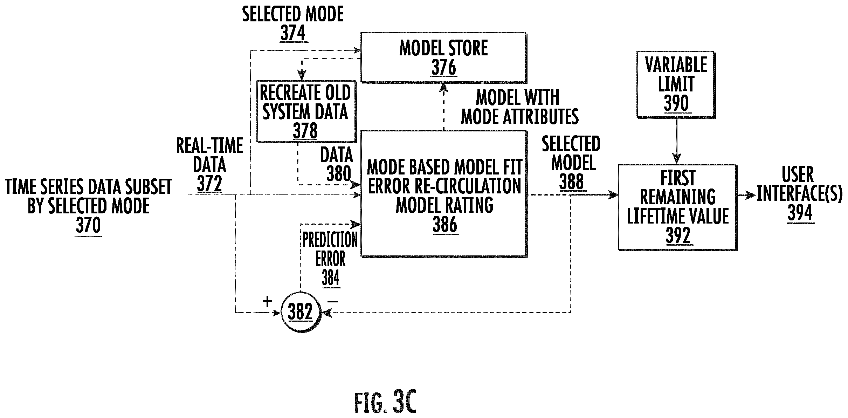

FIG. 3C illustrates a visualization of an example computing environment for generating a remaining lifetime value for a root cause variable, in accordance with at least some example embodiments of the present disclosure. As depicted, the remaining lifetime value may be generated based on and otherwise associated with the root cause limit threshold for the particular root cause variable. For example, a variable limit 390 for a particular root cause variable may be embodied by the adjusted final limit threshold 364 or the first level limit threshold 358 for the root cause variable as described herein with respect to FIG. 3B.

As illustrated, time series data subset by selected mode 370 is received. The time series data may embody system data received associated with a particular target asset at one or more time intervals. In some embodiments, the system data includes multiple measurements from a particular sensor measured at different points in time and associated with one or more root cause variables. The time series data may be divided into subsets associating like data values, for example by dividing the time series data based on selected mode of the asset. For example, the time series data subset by selected mode of the target asset.

The real-time data 372 of the time series data subset by selected mode 370 may be processed in one or more operations as depicted and described. For example, in some embodiments, the lifetime monitoring apparatus 200 performs a prediction error determination operation 382. At the prediction error determination 382, for example, the lifetime monitoring apparatus 200 compares the predicted value for a root cause variable at a particular time with an actual value for the root cause variable identified in or determined from the real-time data 372. In this regard, the prediction error 384 is determined from operation 382 based on the difference between the predicted value for the root cause variable and the actual value for the root cause variable. In this regard, the prediction error 384 may be recirculated for updating the fitness of the corresponding model with respect to modeling the actual trend of the root cause variable.
Alternatively or additionally, the prediction error 384 may be used to adjust the next predicted value.

One or more data inputs may be utilized to calculate the goodness of fit for one or more models at model selection operation 386, for example the degradation models 356 as depicted and described with respect to FIG. 3B. In this regard, the degradation model determined to be associated with the best fit for a particular root cause variable may be selected for use in generating next estimated value(s) for the root cause variable. The value representing a goodness of fit calculated for the particular degradation model may further be provided, for example for viewing by a user, to enable the user account for the probability the remaining lifetime value is accurate as represented by the goodness of fit value for the model. In some embodiments, for example using an ensemble model, the lifetime monitoring apparatus 200 selects a selected model 388 based on the determined values for goodness of fit for each candidate model.

The selected model 388 may be stored and/or otherwise archived in model store 376 upon selection. In some embodiments, the selected model 388 may be stored associated with mode attributes indicating a selected mode for the target asset. In this regard, the model may be stored with an indication of the selected mode 374 for use in recreating or otherwise "rehydrating" previous system data processed by the corresponding selected model 388. For example, an archived version of the selected model 388 may be utilized to recreate old data batches processed by the selected model 388 for further processing. In this regard, the lifetime monitoring apparatus 200 may recreate the old system data at operation 378 utilizing the archived version a model to such that the recreated old data 380 may be merged with the new batch of real-time data 372 to increase the data size utilized to create the model and to improve the accuracy of the model across a wider corpus of data. In this regard, each iteration of model generation, selection, and/or processing improves the accuracy and robustness of the model fitting to the received data. Such embodiments additionally or alternatively better capture changes in trend profiles, for example changes from linear value changes during normal operation to exponential value changes during degradation by utilizing ensembling of one or more such models.

Additionally or alternatively, in some embodiments, the model receives as input the prediction error 384. The prediction error 384 may provide an adjustment to the remaining lifetime value generated for the next batch of real time data 372. In this regard, the error in previously generated remaining lifetime value(s) is re-circulated to improve the accuracy of subsequent iterations of estimating. Such embodiments of the present disclosure adapt to prediction errors to improve the overall accuracy of subsequent predictions.

The selected model 388 is subsequently utilized to generate one or more data values. In some embodiments, for example, the selected model 388 is utilized to generate an estimated value for the root cause variable at one or more future times. In some such embodiments, the estimated value for the root cause variable represents or otherwise is used to derive a first remaining lifetime value 392 for the root cause variable. The first remaining lifetime value 392 may embody a time until the value of the root cause variable is estimated to meet or exceed a particular root cause limit threshold embodied by the variable limit 390. As described herein, the variable limit 390 may be generated as described herein with respect to FIG. 3B, for example embodied by the adjusted final limit threshold 364.

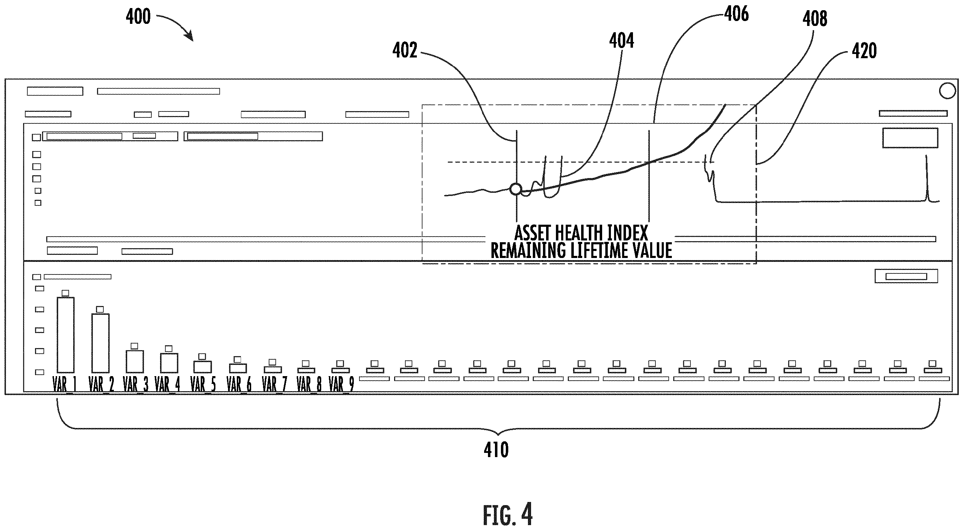

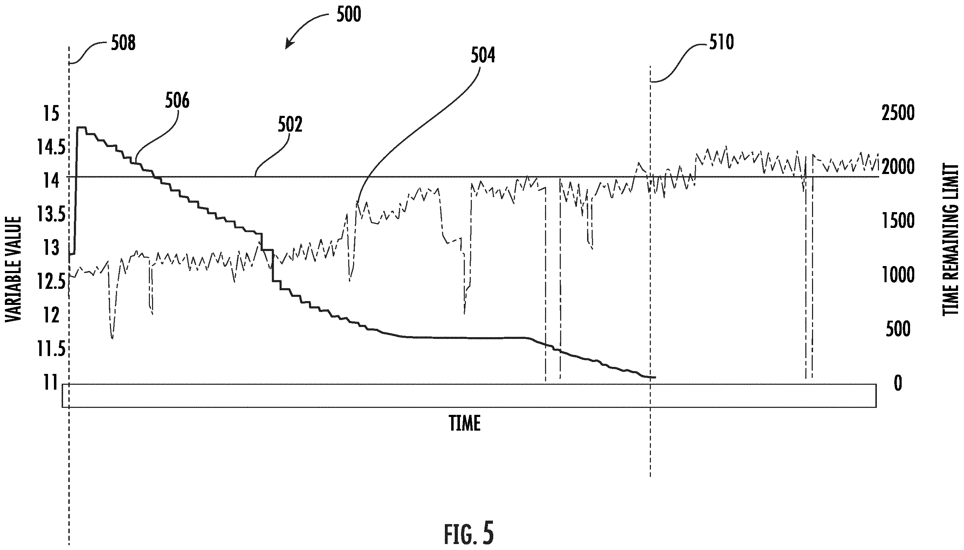

In some embodiments, first remaining lifetime value 392 is utilized in providing one or more user interface(s) 394. For example, the first remaining lifetime value 392 may be provided via one or more of the user interface(s) 394 to the user, such that the user may view and/or process the first remaining lifetime value 392. In one example context, the user may process the user interface(s) 394 to determine when to initiate one or more maintenance operations associated with a particular target asset. In some embodiments, for example, the first remaining lifetime value 392 is rendered to one or more user interfaces as described herein with respect to FIGS. 4 and/or 5.

The processing operations described with respect to FIG. 3C may similarly be performed with respect to an asset health index. In this regard, the asset health index may embody a combination of root cause variables that each affect the operational health of a target asset. Real-time data associated with one or more sensors, for example, may be received and processed utilizing a selected model. The selected model, for example, may be selected based upon the best fit to the previous values for the asset health index. In this regard, the real time system data and recreated system data from previously utilized models may be utilized to generate and/or select the selected model 388 for further processing. The selected model may be utilized to generate a second remaining lifetime value representing the remaining useful lifetime of the target asset overall. For example, in some embodiments, a limit threshold for the asset health index is generated as described herein with respect to FIG. 3B. In this regard, the remaining useful lifetime embodied by the second remaining lifetime value may represent the estimated length of time until the value of the asset health index violates (e.g., falls below or in other embodiments above) the corresponding limit threshold. The second remaining lifetime value representing the remaining useful lifetime of the target asset overall, for example based on a combination of root cause variables, may similarly be provided via one or more user interface(s) 394. For example, in some embodiments, the second remaining lifetime value is provided via one or more of the user interfaces as described herein with respect to FIGS. 4 and/or 5.

### Example User Interfaces of the Disclosure

FIG. 4 illustrates an example user interface providing a remaining lifetime value associated with an asset health index for an asset or system, in accordance with at least some example embodiments of the present disclosure. The example user interface 400 may be rendered by one or more computing devices, for example the lifetime monitoring apparatus 200 may cause rendering of the example user interface 400 to a display or one or more client device(s) associated with the lifetime monitoring apparatus 200. For example, in some embodiments, the example user interface 400 is rendered to a client device associated with a particular user to enable the user to view and/or otherwise interact with the example user interface 400.

The example user interface 400 includes a plurality of interface elements associated with monitoring the operational lifetime of a target asset. For example, as illustrated, the example user interface 400 includes a remaining useful lifetime graph 420. The remaining useful lifetime graph 420 depicts a visualization of the second remaining lifetime value associated with a target asset that embodies the remaining useful lifetime for the target asset estimated over a particular time interval. It should be appreciated that, as described herein, the remaining useful lifetime associated with the target asset may be generated by one or more model(s) specially configured to generate the remaining useful lifetime based on system data associated with the target asset, for example.

As depicted, for example, the remaining useful lifetime graph 420 includes a remaining lifetime value line 404. The remaining lifetime value line 404 represents the generated remaining lifetime value for the target asset over a particular time period. Specifically, as illustrated, the remaining useful lifetime graph 420 includes the remaining lifetime value line 404 representing the remaining useful lifetime for the target asset over the time interval from a start timestamp represented by time 402 (e.g., embodying the current timestamp) and an end timestamp represented by time marker 406 (e.g., embodying the time until the remaining useful lifetime for the target asset elapses). In this regard, the remaining useful lifetime represented by the remaining lifetime value line 404 may be associated with a value for a health index associated with the target asset. For example, in some embodiments, the remaining lifetime value embodies a length of time until the value for the health index associated with target asset reaches a particular threshold. As illustrated, for example, the remaining lifetime value line 404 represents the remaining length of time until the asset health index associated with the target asset is estimated to exceed an asset health index threshold depicted by the asset health threshold indicator 408. In this regard, the use may view the remaining useful lifetime graph 420 to readily identify the remaining useful lifetime for the target asset and/or identify the expected change in the remaining useful lifetime for the target asset over time.

Additionally or alternatively, in some embodiments, the remaining useful lifetime graph 420 and/or associated interface elements may be rendered that indicate action(s) to be performed associated with the target asset. For example, in some embodiments, the remaining useful lifetime graph 420 may be rendered including or associated with one or more interface elements including or otherwise embodying a maintenance notification indicating that maintenance of the target asset should be performed at a particular timestamp (e.g., at a particular offset from the remaining lifetime value reaching zero or another threshold). In this regard, the maintenance notification may provide the user with notification that maintenance should be performed at a particular time based on the estimated actual degradation in operations of the target asset.

As depicted, the example user interface 400 further includes one or more interface elements associated with root cause variable(s) that contributed to the generated remaining lifetime value representing the remaining useful lifetime of the target asset. For example, the example user interface 400 includes a root cause contribution graph 410 that indicates the values associated with the root cause variables contributing to the operational health of the target asset. In this regard, the root cause contribution graph 410 may include an interface element associated with each root cause variable that displays the value of the root cause variable, the effect of the root cause variable on the asset health index indicating the overall operational health of for the target asset based on a combination of root cause variables, and/or the like. The user may view the root cause contribution graph 410 to identify the individual root cause variables having the greatest influence on the operational health of the target asset. Alternatively or additionally, in some embodiments, the root cause contribution graph 410 is configured to receive user interaction associated with a particular root cause variable and, in response to the user interaction, cause rendering of one or more additional interface(s) associated with the root cause variable.

FIG. 5 illustrates another example user interface providing a first remaining lifetime value associated with a particular root cause variable for an asset or system, in accordance with at least some example embodiments of the present disclosure. Specifically, FIG. 5 depicts an example user interface 500 that represents a first remaining lifetime value associated with a particular root cause variable. The root cause variable may, in one example context for example, represent a temperature value associated with operations of a target asset, a vibrations value, and/or the like.

As depicted, the example user interface 500 includes a root cause variable value line 504. The root cause variable value line 504 depicts the calculated and/or otherwise generated value of the root cause variable based on sensor data at particular times. Specifically, the root cause variable value line 504 begins at a start time 508, for example which represents a time at which the target asset began operating after a most recently performed maintenance operation.

The root cause variable value line 504 is depicted together with a representation of a corresponding root cause variable threshold 502. The root cause variable threshold 502 indicates a limit threshold for the value of the root cause variable, for example such that in a circumstance where the value of the root cause variable exceeds the root cause variable threshold 502 the operations of the target asset may be negatively impacted and maintenance of the target asset is recommended or required. The root cause variable threshold 502 may be user set, automatically determined based on historical data associated with operations of the target asset (e.g., historical system data associated with the target asset).

As depicted, the root cause variable value represented by the root cause variable value line 504 exceeds the root cause variable threshold 502 at a second particular time. Specifically, the value represented by the root cause variable value line 504 exceeds the root cause variable threshold 502 at time marker 510. In this regard, the actual value for the root cause variable represented by the root cause variable value line 504 is determined to exceed the corresponding threshold at the second time marker. In some embodiments, the lifetime monitoring apparatus 200 generates the actual value for the root cause variable as system data is received and compares the actual value of the root cause variable with the root cause variable threshold to determine whether the root cause variable threshold has been exceeded.

The user interface 500 further includes a first remaining lifetime value line 506 corresponding to the first remaining lifetime value for the root cause variable. In this regard, the first remaining lifetime value line 506 may indicate the estimated remaining lifetime value for the target asset until the value of the root cause variable associated with the target asset exceeds the root cause variable threshold 502. In this regard, the first remaining lifetime value line 506 and the root cause variable value line 504 depict trends that are generally inverse of one another-such that as the value of the root cause variable represented by the root cause variable value line 504 increases, the first remaining lifetime value represented by the first remaining lifetime value line 506 generally decreases as the time until the root cause variable threshold 502 is reached.

In some embodiments, a user accesses the user interface 500 via user input associated with one or more of the interface elements depicted and described with respect to user interface 400. In this regard, some such embodiments of the present disclosure provide, to a user, a streamlined interface that enables the user to readily identify the remaining useful lifetime of a particular target asset without performing excess manual calculations traditionally required to determine the remaining useful lifetime of a target asset based on one or more contributing factors. For example, the user may view and/or interact with the user interface 400 to perform one or more determinations and/or otherwise monitor the operational health of one or more asset(s) based on an aggregate asset health index associated with the target asset. Further, in circumstances where a user desires to view and/or utilize information associated with a particular aspect of the operational health of the target asset, the user may interact with particular interface elements to access user interfaces associated with the desired particular aspects. In this regard, the lifetime monitoring apparatus 200 may provide high level information to enable the user to quickly perform a high level determinations they may be interested in with respect to operational health of a particular asset while enabling the user to "drill down" into specific aspects of the high level information to perform a more narrowed investigation into the operational health of a particular target asset and/or prospective root causes of problems with said operations.

### Example Processes of the Disclosure

Having described example systems, apparatuses, computing environments, and user interfaces associated with embodiments of the present disclosure, example flowcharts including various operations performed by the apparatuses and/or systems described herein will now be discussed. It should be appreciated that each of the flowcharts depicts an example computer-implemented process that may be performed by one or more of the apparatuses, systems, and/or devices described herein, for example utilizing one or more of the components thereof. The blocks indicating operations of each process may be arranged in any of a number of ways, as depicted and described herein. In some such embodiments, one or more blocks of any of the processes described herein occur in-between one or more blocks of another process, before one or more blocks of another process, and/or otherwise operates as a sun-process of a second process. Additionally or alternative, any of the processes may include some or all of the steps described and/or depicted, including one or more optional operational blocks in some embodiments. In regards to the below flowcharts, one or more of the depicted blocks may be optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

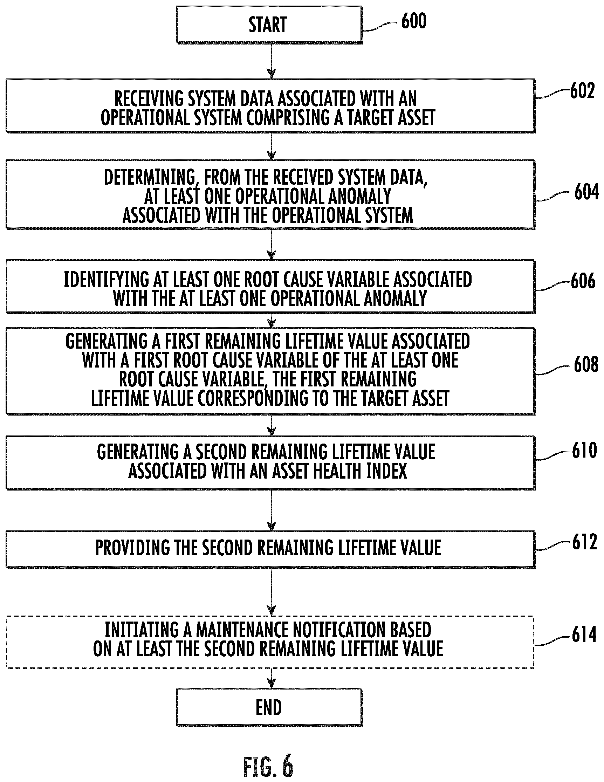

FIG. 6 illustrates a flowchart including operational blocks of an example process for monitoring asset remaining useful lifetime, in accordance with at least some example embodiments of the present disclosure. Specifically, FIG. 6 depicts operations of an example process 600. In some embodiments, the computer-implemented process 600 is embodied by computer program code stored on a non-transitory computer-readable medium of a computer program product configured for execution to perform the computer-implemented method.
Alternatively or additionally, in some embodiments, the example process 600 is performed by one or more specially configured computing devices, such as the lifetime monitoring system 102 embodied by the specially configured lifetime monitoring apparatus 200. In this regard, in some such embodiments, the lifetime monitoring apparatus 200 is specially configured by computer program instructions stored thereon, for example in the memory 204 and/or another component depicted and/or described herein, and/or otherwise accessible to the lifetime monitoring apparatus 200, for performing the operations as depicted and described with respect to the example process 600. In some embodiments, the specially configured lifetime monitoring apparatus 200 includes and/or otherwise is in communication with one or more external apparatuses, systems, devices, and/or the like, to perform one or more of the operations as depicted and described.

The process 600 begins at operation 602. At operation 602, the lifetime monitoring apparatus 200 includes means, such as the input/output circuitry 206, communications circuitry 208, data monitoring circuitry 210, lifetime monitoring circuitry 212, processor 202, and/or the like, to receive system data associated with an operational system comprising a target asset. The system data may be received from one or more sensor(s), such as sensors associated with the target asset and/or, in some embodiments, other assets upstream or downstream from the target asset. Additionally or alternatively, in some embodiments, at least a portion of the system data is received directly from the target asset or an upstream or downstream asset, and/or a controller of other computing device communicable with the target asset or an upstream or downstream asset from the target asset. For example, in some embodiments, configuration data embodying the currently selected mode of the target asset is received from the target asset itself or a controller of the target asset. In some embodiments, the system data is received in real-time continuously or at defined time intervals (e.g., every minute, every 5 minutes, every hour, and/or the like).

At operation 604, the lifetime monitoring apparatus 200 includes means, such as the input/output circuitry 206, communications circuitry 208, data monitoring circuitry 210, lifetime monitoring circuitry 212, processor 202, and/or the like, to determine, from the received system data, at least one operational anomaly associated with the operational system. The operational anomaly indicates that at least one aspect of the operations of a particular asset or an associated upstream or downstream asset differs from standard operations. In this regard, the lifetime monitoring apparatus 200 processes the system data, or particular portions thereof, associated with a particular asset to determine the at least one operational anomaly associated with the target asset, for example. Non-limiting examples of an operational anomaly include one or more variables associated with operation of the asset reaching an unusual level (e.g., a high or low temperature based on a temperature anomaly threshold, a high or low vibration level based on a vibration anomaly threshold, and/or the like), loss of communication with the asset (e.g., asset downtime), changes in operational speed of the asset, and/or the like.

In some embodiments, the lifetime monitoring apparatus 200 determines the at least one operational anomaly utilizing a model configured to determine such operational anomalies for one or more asset(s). For example, the model may be a specially trained algorithmic, machine learning, and/or statistical model configured to determine an operational anomaly for a particular asset based on particular training data indicating such an operational anomaly. In some such embodiments, the model is trained based on data associated with the operations of a particular asset during times of standard operation.

At operation 606, the lifetime monitoring apparatus 200 includes means, such as the input/output circuitry 206, communications circuitry 208, data monitoring circuitry 210, lifetime monitoring circuitry 212, processor 202, and/or the like, to identify at least one root cause variable associated with the at least one operational anomaly. In some embodiments, the at least one root cause variable is determined by determining portions of the system data falling outside a normal operating zone (e.g., exceeding an operational threshold) at the time an operational anomaly was detected. In other embodiments, a particular detected type of anomaly corresponds to one or more particular root cause variables.

At operation 608, the lifetime monitoring apparatus 200 includes means, such as the input/output circuitry 206, communications circuitry 208, data monitoring circuitry 210, lifetime monitoring circuitry 212, processor 202, and/or the like, to generate a first remaining lifetime value associated with a first root cause variable of the at least one root cause variable. The generated first remaining lifetime value embodies a value representing a length of time for a value associated with a corresponding root cause variable of the at least one root cause variable to reach a particular limit threshold for the root cause variable. In some embodiments, the first remaining lifetime value corresponds to the target asset, indicating the length of time estimated for the value associated with the root cause variable associated with the target asset to reach the particular root cause threshold. In some embodiments, for example, a root cause variable embodies a particular monitored data type associated with the target asset (e.g., a physical property monitored by one or more sensors of the target asset or associated upstream or downstream assets, for example a temperature or vibrations level). In some embodiments, the lifetime monitoring apparatus 200 generates a first remaining lifetime value for each root cause variable of the at least one root cause variable.

The first remaining lifetime value may be generated utilizing one or more model(s). In some embodiments, for example, one or more specially trained machine learning, algorithmic, and/or statistical models are utilized to generate the first remaining lifetime value from some or all of the system data. In some embodiments, for example, a model is selected from a plurality of models for generating a first remaining lifetime value, for example via an ensemble process. In this regard, various portions of system data may be processed by a different one or more model(s), and the model with the best fit is selected associated with a particular root cause variable for generating the first remaining lifetime value for the particular root cause variable. In this regard, a model determined to be most accurate or otherwise best for each particular root cause variable individually may be utilized.

At operation 610, the lifetime monitoring apparatus 200 includes means, such as the input/output circuitry 206, communications circuitry 208, data monitoring circuitry 210, lifetime monitoring circuitry 212, processor 202, and/or the like, to generate a second remaining lifetime value associated with an asset health index. The second remaining lifetime value may represent an overall remaining useful lifetime estimated for the target asset based on any number of root cause variables affecting the lifetime of the target asset. The asset health index may be associated with one or more of the at least one root cause variables. In this regard, the asset health index may indicate an overall operational health of the target asset, for example, based on a combination of the one or more root cause variables affecting the asset health index. A value representing the asset health index may be generated and/or derived from the values for each of the individual root cause variables affecting the asset health index.

The second remaining lifetime value associated with the asset health index may be generated utilizing one or more model(s). In some embodiments, the second remaining lifetime value associated with the asset health index is generated utilizing the ensemble process described above with respect to each individual root cause variable. For example, a model utilized to generate the first remaining lifetime value corresponding to a particular root cause variable may similarly be utilized to generate the second remaining lifetime value associated with the asset health index.

At operation 612, the lifetime monitoring apparatus 200 includes means, such as the input/output circuitry 206, communications circuitry 208, data monitoring circuitry 210, lifetime monitoring circuitry 212, processor 202, and/or the like, to provide at least the second remaining lifetime value. In this regard, the lifetime monitoring apparatus 200 may provide at least the second remaining lifetime value for further processing and/or display. In some embodiments, for example, the lifetime monitoring apparatus 200 provides the second remaining lifetime value for rendering via one or more displayed user interfaces. Such user interfaces may be rendered via a display of the lifetime monitoring apparatus 200, and/or a client device associated with the lifetime monitoring apparatus 200. In this regard, for example in some embodiments, the lifetime monitoring apparatus 200 transmits the second remaining lifetime value to a client device for rendering to provide the second remaining lifetime value. In some embodiments, additionally or alternatively, the lifetime monitoring apparatus 200 provides the second remaining lifetime value together with or in addition to the first remaining lifetime value for one or more of the at least one root cause variables, such as to render a user interface including one or more elements representing or based on the second remaining lifetime value corresponding to the asset health index for the target asset and/or one or more interface elements representing or based on the first remaining lifetime value for one or more root cause variables affecting the asset health index.

In some embodiments, the lifetime monitoring apparatus 200 is configured to perform one or more actions based on at least the second remaining lifetime value. For example, at optional operation 614, the lifetime monitoring apparatus 200 includes means, such as the input/output circuitry 206, communications circuitry 208, data monitoring circuitry 210, lifetime monitoring circuitry 212, processor 202, and/or the like, to initiate a maintenance notification based on at least the second remaining lifetime value. In this regard, the maintenance notification may include information indicating that maintenance of the target asset and/or one or more associated assets, such as upstream and/or downstream asset(s), should be performed at a particular time or within a particular time interval. In some embodiments, the maintenance notification is initiated via one or more user interfaces rendered via a user-facing application associated with the lifetime monitoring apparatus 200 (e.g., a user interface of a particular software application utilized to access functionality of the lifetime monitoring apparatus 200 via the lifetime monitoring apparatus 200 or an associated client device). In other embodiments, the maintenance notification is initiated via a third-party application, for example by initiating a maintenance notification embodied by an email message, a text notification, a push notification, and/or the like.

In some embodiments, the maintenance notification is initiated based on at least a determination that the second remaining lifetime value violates (e.g., falls below) a particular threshold. In this regard, the determination may indicate that particular time differential until expiration of the remaining useful lifetime represented by the second remaining lifetime value falls below the particular threshold. Based on the second remaining lifetime value, for example, the lifetime monitoring apparatus 200 may identify the a time representing offset from expiration of the remaining useful lifetime of the asset represented by the second remaining lifetime value by a predetermined, user configured, or otherwise determinable length of time (e.g., a time X days, hours, or the like until the remaining useful lifetime for a particular target asset reaches zero, for example), and in a circumstance where the lifetime monitoring apparatus 200 determines the current timestamp is at or after that time, initiate the maintenance notification. In this regard, the maintenance notification may be provided to prompt an associated user to perform maintenance on the target asset before expiration of the remaining useful lifetime for the target asset, while similarly not prompting maintenance so early that significant uptime is wasted by overly maintaining the target asset.

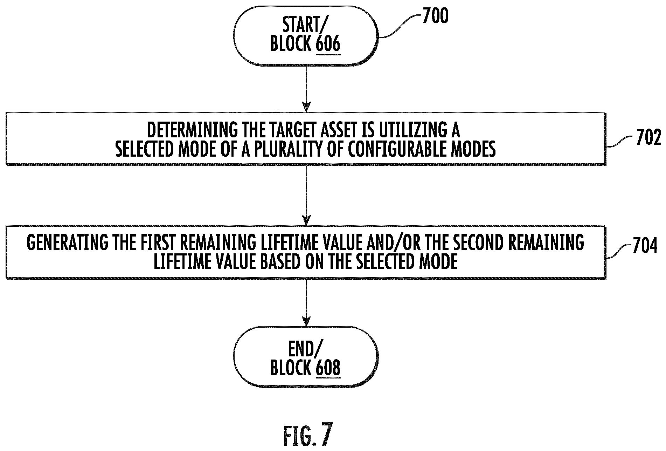

FIG. 7 illustrates a flowchart including additional operational blocks of an example process for generating at least one remaining lifetime value based on a selected mode in monitoring asset remaining useful lifetime value, in accordance with at least some example embodiments of the present disclosure. Specifically, FIG. 7 depicts an example process 700 for generating at least one remaining lifetime value based on a selected mode. In some embodiments, the computer-implemented process 700 is embodied by computer program code stored on a non-transitory computer-readable medium of a computer program product configured for execution to perform the computer-implemented method. Alternatively or additionally, in some embodiments, the example process 700 is performed by one or more specially configured computing devices, such as the lifetime monitoring system 102 embodied by the specially configured lifetime monitoring apparatus 200. In this regard, in some such embodiments, the lifetime monitoring apparatus 200 is specially configured by computer program instructions stored thereon, for example in the memory 204 and/or another component depicted and/or described herein, and/or otherwise accessible to the lifetime monitoring apparatus 200, for performing the operations as depicted and described with respect to the example process 700. In some embodiments, the specially configured lifetime monitoring apparatus 200 includes and/or otherwise is in communication with one or more external apparatuses, systems, devices, and/or the like, to perform one or more of the operations as depicted and described.

The process 700 begins at operation 702. In some embodiments, the process 700 begins after one or more operations of another process, such as the operation 606 of the process 600 as depicted and described. Additionally or alternatively, in some embodiments, upon completion of the process 700 flow proceeds to one or more operations of another process, such as the operation 608 of the process 600 as depicted and described. In other embodiments, the flow ends upon completion of the process 700.

At operation 702, the lifetime monitoring apparatus 200 includes means, such as the input/output circuitry 206, communications circuitry 208, data monitoring circuitry 210, lifetime monitoring circuitry 212, processor 202, and/or the like, to determine the target asset is utilizing a selected mode of a plurality of configurable modes. In some embodiments, system data received associated with the target asset includes one or more values indicating the selected mode utilized by the target asset. Such system data indicating the selected mode utilized by the target asset may be received from the target asset, a controller or other computing device associated with operation of the target asset, an upstream or downstream asset associated with the target asset, and/or one or more sensor(s) associated with the target asset.

At operation 704, the lifetime monitoring apparatus 200 includes means, such as the input/output circuitry 206, communications circuitry 208, data monitoring circuitry 210, lifetime monitoring circuitry 212, processor 202, and/or the like, to generate the first remaining lifetime value and/or the second remaining lifetime value based on the selected mode. In some embodiments, for example, the selected mode is utilized to determine a particular model to utilize in generating the first remaining lifetime value and/or the second remaining lifetime value (e.g., to determine the model that is most accurate for the selected mode). Alternatively or additionally, in some embodiments, the system data utilized to generate the first remaining lifetime value and/or second remaining lifetime value is based on the selected mode. For example, in some circumstances, only system data indicated as corresponding to the selected mode is processed. In this regard, it should be appreciated that by generating the first remaining lifetime value and/or second remaining lifetime value based on the selected mode, the generated values may be more accurate with respect to the operations for the target asset in the selected mode.

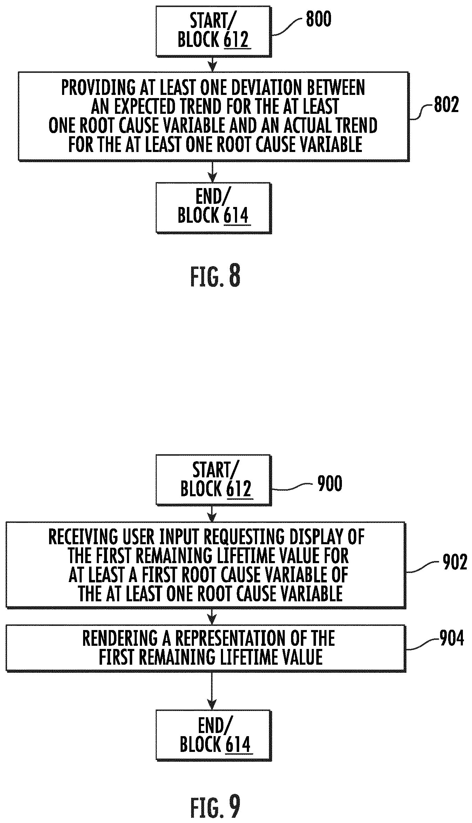

FIG. 8 illustrates a flowchart including additional operational blocks of an example process for providing a trend deviation for at least one root cause variable in monitoring asset remaining useful lifetime value, in accordance with at least some example embodiments of the present disclosure. Specifically, FIG. 8 depicts an example process 800 for providing a trend deviation for at least one root cause variable. In some embodiments, the computer-implemented process 800 is embodied by computer program code stored on a non-transitory computer-readable medium of a computer program product configured for execution to perform the computer-implemented method. Alternatively or additionally, in some embodiments, the example process 800 is performed by one or more specially configured computing devices, such as the lifetime monitoring system 102 embodied by the specially configured lifetime monitoring apparatus 200. In this regard, in some such embodiments, the lifetime monitoring apparatus 200 is specially configured by computer program instructions stored thereon, for example in the memory 204 and/or another component depicted and/or described herein, and/or otherwise accessible to the lifetime monitoring apparatus 200, for performing the operations as depicted and described with respect to the example process 800. In some embodiments, the specially configured lifetime monitoring apparatus 200 includes and/or otherwise is in communication with one or more external apparatuses, systems, devices, and/or the like, to perform one or more of the operations as depicted and described.

The process 800 begins at operation 802. In some embodiments, the process 800 begins after one or more operations of another process, such as the operation 612 of the process 600 as depicted and described. Additionally or alternatively, in some embodiments, upon completion of the process 800 flow proceeds to one or more operations of another process, such as the operation 614 of the process 600 as depicted and described. In other embodiments, the flow ends upon completion of the process 800.

At operation 802, the lifetime monitoring apparatus 200 includes means, such as the input/output circuitry 206, communications circuitry 208, data monitoring circuitry 210, lifetime monitoring circuitry 212, processor 202, and/or the like, to provide at least one deviation between an expected trend for the at least one root cause variable and an actual trend for the at least one root cause variable. In this regard, the estimated value for a root cause value at a future time and represented by a first remaining lifetime value, for example, may be stored upon generation of the value. As subsequent actual system data associated with the subsequent time is received and processed to determine, an actual value for the root cause variable at the time may be generated. Based on the actual value and the previously generated and stored expected value, a deviation may be generated at the particular time, It should be appreciated that this may be repeated for any number of times, with the deviations over time representing a difference between an expected trend and an actual trend.

In some embodiments, the lifetime monitoring apparatus 200 provides the at least one deviation between an expected trend and the actual trend for at least one root cause variable for rendering. For example, the lifetime monitoring apparatus 200 may cause rendering of one or more interface elements that depict the deviation between an expected trend and an actual trend. In this regard, such interface elements may visually depict the offset between the actual trend and the expected trend over time. In this regard, a user may view and/or process the at least one deviation between the trends to inform the user as to how accurate previous estimated values for the at least one root cause variable were. Similarly, such data may inform the user as to whether the estimated remaining lifetime value for the at least one root cause variable is likely to remain accurate. For example, in a circumstance where the deviation between the estimated trend and the actual trend for a particular root cause variable is determined to often be large, the estimated remaining lifetime value for the root cause variable may be less trusted as accurate than in a circumstance where the deviation between the estimated trend and the actual trend for the particular root cause variable is determined to often be small.

FIG. 9 illustrates a flowchart including additional operational blocks of an example process for providing a first remaining lifetime value for at least one root cause variable in monitoring asset remaining useful lifetime value, in accordance with at least some example embodiments of the present disclosure. Specifically, FIG. 9 depicts an example process 900 for providing the first remaining lifetime value for at least one root cause variable. In some embodiments, the computer-implemented process 900 is embodied by computer program code stored on a non-transitory computer-readable medium of a computer program product configured for execution to perform the computer-implemented method. Alternatively or additionally, in some embodiments, the example process 900 is performed by one or more specially configured computing devices, such as the lifetime monitoring system 102 embodied by the specially configured lifetime monitoring apparatus 200. In this regard, in some such embodiments, the lifetime monitoring apparatus 200 is specially configured by computer program instructions stored thereon, for example in the memory 204 and/or another component depicted and/or described herein, and/or otherwise accessible to the lifetime monitoring apparatus 200, for performing the operations as depicted and described with respect to the example process 900. In some embodiments, the specially configured lifetime monitoring apparatus 200 includes and/or otherwise is in communication with one or more external apparatuses, systems, devices, and/or the like, to perform one or more of the operations as depicted and described.

The process 900 begins at operation 902. In some embodiments, the process 900 begins after one or more operations of another process, such as the operation 612 of the process 600 as depicted and described. Additionally or alternatively, in some embodiments, upon completion of the process 900 flow proceeds to one or more operations of another process, such as the operation 614 of the process 600 as depicted and described. In other embodiments, the flow ends upon completion of the process 900.

At operation 902, the lifetime monitoring apparatus 200 includes means, such as the input/output circuitry 206, communications circuitry 208, data monitoring circuitry 210, lifetime monitoring circuitry 212, processor 202, and/or the like, to receive user input request display of the first remaining lifetime value for at least a first root cause variable of the at least one root cause variable. In some embodiments, for example, the user may interact with one or more interface elements of a rendered user interface that correspond to the first root cause variable of the at least one root cause variables. Such interaction may indicate that the user would like to explore more details about the particular root cause variable. For example, in some embodiments a user interface includes one or more interface elements associated with an asset health index and/or second remaining lifetime value for the target asset based on the asset health index overall, as well as interface elements associated with each or at least some root cause variables associated with the asset health index. The user may interact with the interface element(s) associated with a particular root cause variable to request display of additional information associated with the particular root cause variable, for example display of at least the first remaining lifetime value associated with the root cause variable. The user may provide such user input to process and/or otherwise investigate the operational health of a target asset on an individual basis, and/or to process and/or otherwise investigate the effects of the particular root cause variable on the asset health index and/or corresponding second remaining lifetime value representing the overall remaining useful lifetime for the target asset.

At operation 904, the lifetime monitoring apparatus 200 includes means, such as the input/output circuitry 206, communications circuitry 208, data monitoring circuitry 210, lifetime monitoring circuitry 212, processor 202, and/or the like, to render a representation of the first remaining lifetime value. In this regard, for example, the lifetime monitoring apparatus 200 may render an additional or replacement user interface that represents the estimated remaining lifetime value for the root cause variable over time. The first remaining lifetime value may be rendered together with a representation of a corresponding root cause threshold with which the first remaining lifetime value is associated. In this regard, it should be appreciated that the user may investigate any number root cause variables individually in addition to processing the asset health index and associated second remaining lifetime value corresponding to the target asset's remaining useful lifetime overall based on a combination of one or more root cause variables.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine- generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communications network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto- optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communications network. Examples of communications networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communications network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous.
Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method, comprising:
receiving (602) system data associated with a target asset of an operational system, wherein the operations of the target asset are affected by the operations of an upstream asset and the operations of the target asset affect the operations of a downstream asset;
determining (604) at least one operational anomaly associated with the target asset based on the system data, wherein the operational anomaly is indicative of a difference in operations of the target asset with respect to standard operation;
identifying (606) a root cause variable associated with the at least one operational anomaly;
determining a first remaining lifetime value for the root cause variable, the first remaining lifetime value representing a time to reach a limit threshold value associated with the root cause variable;
determining a second remaining lifetime value for an asset health index representing an overall operational health of the target asset and associated with the target asset based on the first remaining lifetime value, the second remaining lifetime value representing a remaining useful lifetime for the target asset and, wherein the asset health index associated with the target asset impacts operational health of the at least one of the upstream asset and downstream asset; and
initiating at least one of a maintenance and repair processes for the target asset based on the first remaining lifetime value and the second remaining lifetime value.

2. The method of claim 1, wherein the asset health representing an overall operational health of the target asset based on a combination of the one ore more root cause variables.

3. The method of claim 1, wherein determining the first remaining lifetime value comprises: processing the system data of the target asset using a model, wherein the model is trained based on a historical system data associated with the target asset and similar assets to identify the root cause variable.

4. The method of claim 3, wherein the second remaining lifetime value is determined by at least one of the model and the first remaining lifetime value.

5. The method of claim 3, wherein the model determines that a first root cause variable of the one ore more root cause variables and a second root cause variable of the one ore more root cause variables have a direct relationship affecting the second remaining lifetime value.

6. The method of any one of claims 1-5, the method further comprising:
rendering on a user interface, at least one deviation between an expected trend for the root cause variable and an actual trend for the root cause variable.

7. The method of any one of claims 1-6, wherein at least a portion of the system data comprises data from at least one sensor associated with the target asset.

8. The method of any one of claims 1-7, the method further comprising:
determining the target asset is utilizing a selected mode of a plurality of configurable modes, the second remaining lifetime variable determined based on the selected mode.

9. The method of any one of claims 1-8, wherein receiving the system data comprises:
receiving at least a portion of the system data in real-time at a set interval.

10. The method of any one of claims 1-9, wherein
initiating at least one of a maintenance repair process for the target asset comprises prompting to perform maintenance on the target asset before expiration of the remaining useful lifetime for the target asset.

11. The method of any one of claims 1-10, wherein providing the second remaining lifetime value comprises rendering of the second remaining lifetime value, the method further comprising:
receiving user input requesting display of the first remaining lifetime value for the root cause variable; and
rendering of the first remaining lifetime value.

12. The method of claim 1 comprising determining that the second remaining lifetime value falls below an operational threshold value for initiating maintenance notification.

13. An apparatus comprising at least one processor and at least one memory including computer program code, the at least one memory and the computer program code configured to, with the at least one processor, cause the apparatus to perform any one of the methods according to claims 1-12.

14. A computer program product comprising at least one non-transitory computer-readable medium having computer-readable program instructions stored therein, the computer-readable program instructions comprising instructions, which when performed by an apparatus, are configured to cause the apparatus to at least perform any one of the methods according to claims 1-12.

## Patentansprüche

1. Verfahren, umfassend:
Empfangen (602) von Systemdaten, die einer Zielanlage eines betrieblichen Systems zugeordnet sind, wobei der Betrieb der Zielanlage durch den Betrieb einer vorgelagerten Anlage beeinflusst wird und der Betrieb der Zielanlage den Betrieb einer nachgelagerten Anlage beeinflusst;
Bestimmen (604) von mindestens einer der Zielanlage zugeordneten betrieblichen Anomalie auf Basis der Systemdaten, wobei die betriebliche Anomalie auf einen Unterschied des Betriebs der Zielanlage in Bezug auf den Standardbetrieb hinweist;
Identifizieren (606) einer Grundursachenvariablen, die der mindestens einen betrieblichen Anomalie zugeordnet ist;
Bestimmen eines ersten Restlebenszeitwertes für die Grundursachenvariable, wobei der erste Restlebenszeitwert eine Zeit darstellt, um einen Grenzschwellenwert zu erreichen, der der Grundursachenvariablen zugeordnet ist;
Bestimmen eines zweiten Restlebenszeitwertes für einen Anlagengesundheitsindex, der eine betriebliche Gesamtgesundheit der Zielanlage darstellt und der Zielanlage zugeordnet ist, auf Basis des ersten Restlebenszeitwertes, wobei der zweite Restlebenszeitwert eine Restnutzungslebenszeit für die Zielanlage darstellt und wobei der der Zielanlage zugeordnete Anlagengesundheitsindex sich auf die betriebliche Gesundheit von mindestens einer aus der vorgelagerten Anlage und der nachgelagerten Anlage auswirkt; und
Einleiten von mindestens einem aus einem Wartungs- und einem Reparaturprozess für die Zielanlage auf Basis des ersten Restlebenszeitwertes und des zweiten Restlebenszeitwertes.

2. Verfahren nach Anspruch 1, wobei die Anlagengesundheit eine betriebliche Gesamtgesundheit der Zielanlage auf Basis einer Kombination der einen oder mehreren Grundursachenvariablen darstellt.

3. Verfahren nach Anspruch 1, wobei das Bestimmen des ersten Restlebenszeitwertes Folgendes umfasst: Verarbeiten der Systemdaten der Zielanlage unter Verwendung eines Modells, wobei das Modell auf Basis von historischen Systemdaten, die der Zielanlage und ähnlichen Anlagen zugeordnet sind, trainiert wird, um die Grundursachenvariable zu identifizieren.

4. Verfahren nach Anspruch 3, wobei der zweite Restlebenszeitwert durch mindestens eines aus dem Modell und dem ersten Restlebenszeitwert bestimmt wird.

5. Verfahren nach Anspruch 3, wobei das Modell bestimmt, dass eine erste Grundursachenvariable aus der einen oder den mehreren Grundursachenvariablen und eine zweite Grundursachenvariable aus der einen oder den mehreren Grundursachenvariablen einen direkten Zusammenhang aufweisen, der den zweiten Restlebenszeitwert beeinflusst.

6. Verfahren nach einem der Ansprüche 1-5, das Verfahren ferner umfassend:
Wiedergeben auf einer Benutzeroberfläche von mindestens einer Abweichung zwischen einem erwarteten Trend für die Grundursachenvariable und einem tatsächlichen Trend für die Grundursachenvariable.

7. Verfahren nach einem der Ansprüche 1-6, wobei mindestens ein Teil der Systemdaten Daten von mindestens einem der Zielanlage zugeordneten Sensor umfasst.

8. Verfahren nach einem der Ansprüche 1-7, das Verfahren ferner umfassend:
Bestimmen, dass die Zielanlage einen ausgewählten Modus einer Vielzahl von konfigurierbaren Modi benutzt, wobei die zweite Restlebenszeitvariable auf Basis des ausgewählten Modus bestimmt wird.

9. Verfahren nach einem der Ansprüche 1-8, wobei das Empfangen der Systemdaten Folgendes umfasst:
Empfangen von mindestens einem Teil der Systemdaten in Echtzeit in einem festgelegten Intervall.

10. Verfahren nach einem der Ansprüche 1-9, wobei
das Einleiten von mindestens einem aus einem Wartungs- und Reparaturprozess für die Zielanlage das Auffordern, eine Wartung an der Zielanlage vor Ablauf der Restnutzungslebenszeit für die Zielanlage durchzuführen, umfasst.

11. Verfahren nach einem der Ansprüche 1-10, wobei das Bereitstellen des zweiten Restlebenszeitwertes das Wiedergeben des zweiten Restlebenszeitwertes umfasst, das Verfahren ferner umfassend:
Empfangen einer Benutzereingabe, die das Anzeigen des ersten Restlebenszeitwertes für die Grundursachenvariable verlangt; und Wiedergeben des ersten Restlebenszeitwertes.

12. Verfahren nach Anspruch 1, umfassend das Bestimmen, dass der zweite Restlebenszeitwert unter einen betrieblichen Schwellenwert zum Einleiten einer Wartungsbenachrichtigung fällt.

13. Einrichtung umfassend mindestens einen Prozessor und mindestens einen Speicher, der einen Computerprogrammcode beinhaltet, wobei der mindestens eine Speicher und der Computerprogrammcode dazu konfiguriert sind, mit dem mindestens einen Prozessor die Einrichtung zu veranlassen, eines der Verfahren gemäß den Ansprüchen 1-12 durchzuführen.

14. Computerprogrammprodukt, umfassend mindestens ein nichtflüchtiges computerlesbares Medium mit darin gespeicherten computerlesbaren Programmanweisungen, wobei die computerlesbaren Programmanweisungen Anweisungen umfassen, die, wenn sie von einer Einrichtung durchgeführt werden, dazu konfiguriert sind, die Einrichtung zu veranlassen, mindestens eines der Verfahren gemäß den Ansprüchen 1-12 durchzuführen.

## Revendications

1. Procédé, comprenant :
la réception (602) de données système associées à un actif cible d'un système opérationnel, dans lequel les opérations de l'actif cible sont affectées par les opérations d'un actif amont et les opérations de l'actif cible affectent les opérations d'un actif aval ;
la détermination (604) d'au moins une anomalie opérationnelle associée à l'actif cible en fonction des données système, dans laquelle l'anomalie opérationnelle est représentative d'une différence dans les opérations de l'actif cible par rapport à une opération standard ;
l'identification (606) d'une variable de cause racine associée au moins à une anomalie opérationnelle ;
la détermination d'une première valeur de durée de vie restante pour la variable de cause racine, la première valeur de durée de vie restante représentant un temps pour atteindre une valeur seuil limite associée à la variable de cause racine ;
la détermination d'une deuxième valeur de durée de vie restante pour un indice de santé de l'actif représentant une santé opérationnelle globale de l'actif cible et associée à l'actif cible en fonction de la première valeur de durée de vie restante, la deuxième valeur de durée de vie restante représentant une durée de vie utile restante pour l'actif cible et, dans lequel l'indice de santé de l'actif associé à l'actif cible impacte la santé opérationnelle d'au moins l'un parmi l'actif amont et l'actif aval ; et
le lancement d'au moins un des processus de maintenance et de réparation pour l'actif cible en fonction de la première valeur de durée de vie restante et de la deuxième valeur de durée de vie restante.

2. Procédé de la revendication 1, dans lequel la santé de l'actif représente une santé opérationnelle globale de l'actif cible en fonction d'une combinaison d'une ou plusieurs variables de cause racine.

3. Procédé de la revendication 1, dans lequel la détermination de la première valeur de durée de vie restante comprend : le traitement des données système de l'actif cible en utilisant un modèle, dans lequel le modèle est entraîné en fonction de données système historiques associées à l'actif cible et à des actifs similaires afin d'identifier la variable de cause racine.

4. Procédé de la revendication 3, dans lequel la deuxième valeur de durée de vie restante est déterminée par au moins un des modèles et la première valeur de durée de vie restante.

5. Procédé de la revendication 3, dans lequel le modèle détermine qu'une première variable de cause racine d'une ou plusieurs variables de cause racine et qu'une deuxième variable de cause racine d'une ou plusieurs variables de cause racine ont une relation directe affectant la deuxième valeur de durée de vie restante.

6. Procédé de l'une des revendications 1-5, comprenant en outre :
la représentation sur une interface utilisateur, d'au moins un écart entre une tendance prévisible pour la variable de cause racine et une tendance effective pour la variable de cause racine.

7. Procédé de l'une des revendications 1-6, dans lequel au moins une partie des données système comprend des données provenant d'au moins un capteur associé à l'actif cible.

8. Procédé de l'une des revendications 1-7, comprenant en outre :
la détermination si l'actif cible utilise un mode sélectionné parmi une pluralité de modes configurables, la deuxième variable de durée de vie restante étant déterminée en fonction du mode sélectionné.

9. Procédé de l'une des revendications 1-8, dans lequel la réception des données système comprend :
la réception d'au moins une partie des données système en temps réel à un intervalle déterm iné.

10. Procédé de l'une des revendications 1-9, dans lequel
le lancement d'au moins un des processus de maintenance et de réparation pour l'actif cible comprend l'incitation à effectuer une maintenance sur l'actif cible avant l'expiration de la durée de vie utile restante pour l'actif cible.

11. Procédé de l'une des revendications 1-10, dans lequel la mise à disposition de la deuxième valeur de durée de vie restante comprend la représentation de la deuxième valeur de durée de vie restante, le procédé comprenant en outre :
la réception d'une entrée utilisateur demandant l'affichage de la première valeur de durée de vie restante pour la variable de cause racine ; et la représentation de la première valeur de durée de vie restante.

12. Procédé de la revendication 1, comprenant la détermination si la deuxième valeur de durée de vie restante passe en dessous d'une valeur seuil opérationnelle pour le lancement d'une notification de maintenance.

13. Dispositif comprenant au moins un processeur et au moins une mémoire incluant un code de programme informatique, au moins la mémoire et le code de programme informatique étant configurés pour, avec au moins le processeur, amener le dispositif à exécuter l'un des procédés selon les revendications 1-12.

14. Produit de programme informatique comprenant au moins un support non transitoire lisible par ordinateur ayant des instructions de programme lisibles par ordinateur stockées dans celui-ci, les instructions de programme lisibles par ordinateur comprenant des instructions qui, lorsqu'elles sont exécutées par un dispositif, sont configurées pour amener le dispositif à exécuter au moins l'un des procédés selon les revendications 1-12.
